# EUROPEAN PATENT APPLICATION

(11) **EP 3 767 998 A1**
(43) Date of publication of application: **20.01.2021**
(21) Application number: 19767047.4
(22) Date of filing: 27.02.2019
(51) Int. Cl.: H04W 40/02, H04W 48/18, H04W 88/06

(54) **DEVICE MANAGEMENT SYSTEM, DEVICE, AND CONTROL METHOD**

(30) Priority: 13.03.2018 US 201862642239 P
(71) Applicant: Panasonic Intellectual Property Corporation of America, Torrance, CA 90503 (US)
(72) Inventor: YOSHIKAWA, Yoshishige, Osaka 540-6207 (JP); OGAWA, Tomoki, Osaka 540-6207 (JP); YAMADA, Mitsuki, Osaka 540-6207 (JP); KOZUKA, Masayuki, Osaka 540-6207 (JP); NAKAI, Shinya, Osaka 540-6207 (JP)
(74) Representative: Grünecker Patent- und Rechtsanwälte PartG mbB
(86) International application number: PCT/JP2019/007579
(87) International publication number: WO 2019/176542

(57) **Abstract**

An appliance management system (1) includes an appliance (10), a server (20) that manages the appliance (10) and that can be connected to the appliance (10) via a plurality of different networks, and a selection device (30) provided in a communication channel that connects the server (20) and each of one or more networks of the plurality of networks. The selection device (30) selects, from the plurality of networks, one network to be used for communication between the appliance (10) and the server (20) based on a comparison of communication-related properties of the plurality of networks and causes the appliance (10) and the server (20) to communicate via the selected one network.

## Description

### TECHNICAL FIELD

The present disclosure relates to an appliance management system, an appliance, and a control method.

### BACKGROUND ART

Nowadays, there is a home appliance (also referred to as an appliance) that is connected, via a network, to a home appliance cloud (also referred to as a control cloud) that controls the appliance, and this home appliance operates under the control of the control cloud (see Patent Literature 1).

### Citation List

### Patent Literature

PTL 1: Japanese Unexamined Patent Application Publication No. 2016-63520

### SUMMARY OF THE INVENTION

### TECHNICAL PROBLEM

Typically, the communication speed of communication via a network, the frequency of occurrence of communication loss, the geographical range where connection is available, the cost, and so on vary.

However, in a case where an appliance can be connected to a control cloud via a plurality of networks, the user may not necessarily select an appropriate network among the plurality of networks. If the appliance becomes connected to the control cloud via a network that is not appropriate, even if communication is carried out, there may be a problem in that the communication quality is low or a large amount of communication resources is consumed, as compared to a case where the appliance is connected via an appropriate network.

Accordingly, the present disclosure provides an appliance management system and so on that make it possible to appropriately select, from a plurality of networks, a network to be used to connect an appliance and a control cloud.

### SOLUTIONS TO PROBLEM

A control method according to the present disclosure includes: an appliance; a server that manages the appliance, the server being connectable to the appliance via a plurality of networks that differ from each other; and a selection device provided in a communication channel that connects the server and each of one or more networks of the plurality of networks, wherein the selection device selects, from the plurality of networks, one network to be used for communication between the appliance and the server based on a comparison of communication-related properties of the plurality of networks, and causes the appliance and the server to communicate via the one network selected.

According to the above, the appliance management system communicably connects the appliance and the server via one network selected in accordance with the properties of the plurality of networks. Thus, the appliance and the server can be connected via an appropriate network, and this can prevent any degradation in the communication quality or any wasted resources, which could occur if the appliance and the server are connected via an inappropriate network. In this manner, the appliance management system can appropriately select, from a plurality of networks, a network to be used to connect the appliance and the control cloud.

The selection device may be provided in a communication channel that connects the server and each of the plurality of networks.

According to the above, the appliance management system can appropriately select, from a plurality of networks, a network to be used to connect the appliance and the control cloud more easily with the selection device provided closer to the server than to the network.

In a case where the plurality of networks include a first network that partially includes a short-distance wireless communication link to be established by the appliance, the selection device may select the first network as the one network.

According to the above, in a case where the appliance can use a short-distance wireless communication link, the appliance management system connects the appliance and the server with the use of a network that includes the short-distance wireless communication link. Thus, the appliance and the server can be connected via a communication channel that is relatively fast and inexpensive. In this manner, the appliance management system can appropriately select, from a plurality of networks, a network to be used to connect the appliance and the control cloud.

In a case where the plurality of networks include a second network that is a network for long-distance wireless communication having a communication speed higher than a predetermined communication speed and a third network that is a network for long-distance wireless communication having a communication speed lower than the communication speed of the second network, the selection device may (a) select the second network as the one network when an amount of data to be communicated is greater than a first threshold, and (b) select the third network as the one network when the amount of data to be communicated is less than or equal to the first threshold.

According to the above, in a case where the appliance and the server can be connected via two long-distance wireless communication networks having different communication speeds, the appliance management system selects either one of the networks based on a threshold for the amount of data and uses the selected network to connect the appliance and the server. In this manner, the appliance management system can appropriately select, from a plurality of networks, a network to be used to connect the appliance and the control cloud.

The selection device may further acquire cost information indicating a cost required for communication carried out via the second network and set the first threshold to a higher value for higher values of the cost indicated by the cost information acquired.

According to the above, the appliance management system determines the threshold for selecting either one of the two long-distance wireless communication networks in accordance with the cost required for the communication carried out via these networks. Thus, in a case where the cost is high, the use of a lower-speed long-distance wireless communication network can be increased. In this manner, the appliance management system can appropriately select, from a plurality of networks, a network to be used to connect the appliance and the control cloud.

In a case where the plurality of networks include a second network that is a network for long-distance wireless communication having a communication speed higher than a predetermined communication speed and a third network that is a network for long-distance wireless communication having a communication speed lower than the communication speed of the second network, the selection device may (a) select the second network as the one network when a time required for communication is greater than a second threshold, and (b) select the third network as the one network when the time required for the communication is less than or equal to the second threshold.

According to the above, in a case where the appliance and the server can be connected via two long-distance wireless communication networks having different communication speeds, the appliance management system selects either one of the networks based on the threshold for the time required for the communication and uses the selected network to connect the appliance and the server. In this manner, the appliance management system can appropriately select, from a plurality of networks, a network to be used to connect the appliance and the control cloud.

The selection device may further acquire cost information indicating a cost required for communication carried out via the second network and set the second threshold to a higher value for higher values of the cost indicated by the cost information acquired.

According to the above, the appliance management system determines the threshold for selecting either one of the two long-distance wireless communication networks in accordance with the time required for the communication carried out via these networks. Thus, the use of a lower-speed long-distance wireless communication network can be increased for the communication that requires more time. In this manner, the appliance management system can appropriately select, from a plurality of networks, a network to be used to connect the appliance and the control cloud.

The plurality of networks may include a plurality of long-distance wireless communication networks, and the selection device may be provided in a communication channel that connects the server and each of the plurality of long-distance wireless communication networks and select the one network based on a comparison of communication-related properties of the plurality of long-distance wireless communication networks.

According to the above, in a case where the selection device is provided in, of a plurality of long-distance communication networks and a short-distance wireless communication network, the plurality of long-distance communication networks, the appliance management system selects a line to be used to connect the appliance and the server with the use of the selection device. Then, the appliance management system can appropriately select, from the plurality of long-distance communication networks, a network to be used to connect the appliance and the control cloud more easily with the selection device provided closer to the server than to the network.

The plurality of networks may include a first network that partially includes a short-distance wireless communication link to be established by the appliance and one or more long-distance wireless communication networks, the selection device may be provided only in a communication channel that connects the server and, of the plurality of networks, each of the one or more long-distance wireless communication networks, the server may transmit a line disconnecting signal to the selection device, and in response to receiving the line disconnecting signal, the selection device may disconnect a connection between the server and each of the one or more long-distance wireless communication networks.

According to the above, in the appliance management system, the selection device is provided in, of the plurality of long-distance wireless communication networks and the short-distance wireless communication network, the plurality of long-distance wireless communication networks, and the appliance management system selects a line to be used to connect the appliance and the server with the use of the selection device. Specifically, in a case where the selection device has received a disconnecting signal, the appliance management system disconnects the communication with the plurality of long-distance wireless communication networks, and thus the appliance management system can select the short-distance wireless communication network as the line to be used to connect the appliance and the server. In this manner, the appliance management system can appropriately select, from a plurality of networks, a network to be used to connect the appliance and the control cloud more easily.

The plurality of networks may include a carrier-based Low Power Wide Area (LPWA) network and a non-carrier-based LPWA network as long-distance wireless communication networks, and a network that partially includes a Wi-Fi (registered trademark) communication link as a network that partially includes a short-distance wireless communication link to be established by the appliance.

According to the above, the appliance management system can use the carrier-based Low Power Wide Area (LPWA) network, the non-carrier-based LPWA network, and the network that partially includes the Wi-Fi communication link and appropriately select, from these networks, a network to be used to connect the appliance and the control cloud.

An appliance according to the present disclosure includes: a plurality of wireless communication modules that connect the appliance to a server managing the appliance via a plurality of networks that differ from each other; and a controller that controls an operation of the appliance based on control information received from the server via the plurality of wireless communication modules.

According to the above, the appliance can control an operation based on the control information received from the server via any one of the plurality of networks.

The plurality of wireless communication modules may include a communication module for carrier-based Low Power Wide Area (LPWA), a communication module for non-carrier-based LPWA, and a communication module for Wi-Fi.

According to the above, the appliance can use a carrier-based Low Power Wide Area (LPWA) network, a non-carrier-based LPWA network, and a network that partially includes a Wi-Fi communication link and appropriately select, from these networks, a network to be used to connect the appliance and the control cloud.

An appliance according to the present disclosure is a method of controlling an appliance management system that includes an appliance and a server, and the server is connectable to the appliance through a plurality of different networks and manages the appliance. The method includes: selecting, by a selection device provided in a communication channel that connects the server and each of one or more networks of the plurality of networks, one network to be used for communication between the appliance and the server from the plurality of networks based on a comparison of communication-related properties of the plurality of networks; and causing the appliance and the server to communicate via the one network selected.

According to the above, an advantageous effect similar to that obtained with the appliance management system can be obtained.

### ADVANTAGEOUS EFFECT OF INVENTION

An appliance according to the present disclosure can appropriately select, from a plurality of networks, a network to be used to connect the appliance and a control cloud.

### BRIEF DESCRIPTION OF DRAWINGS

FIG. 1 is a descriptive diagram illustrating the evolution of home appliances.
FIG. 2 is a descriptive diagram illustrating an example of an architecture of third generation home appliances and their cooperation with external services.
FIG. 3 is a descriptive diagram illustrating an example of an architecture of third generation home appliances and their cooperation with an AI speaker.
FIG. 4 is a descriptive diagram illustrating a first technical problem of third generation home appliances.
FIG. 5 is a descriptive diagram illustrating a second technical problem of third generation home appliances.
FIG. 6 is a descriptive diagram illustrating a network connection rate of home appliances with embedded network connection functionality.
FIG. 7 is a descriptive diagram illustrating network connections and so on of cloud home appliances.

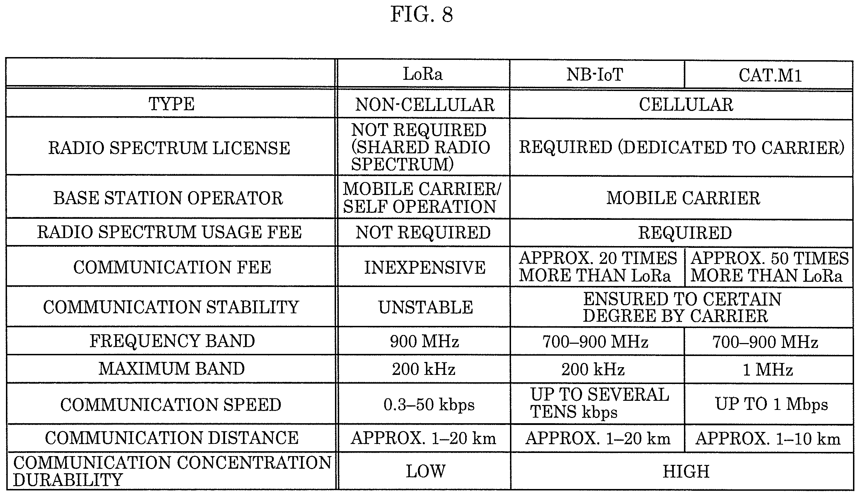

FIG. 8 is a table illustrating three schemes of LPWA.
FIG. 9 is a first descriptive diagram illustrating an architecture of fourth generation home appliances and their cooperation with external services.
FIG. 10A is a configuration diagram of an appliance management system.
FIG. 10B is a flowchart illustrating a control method to be executed by an appliance management system.
FIG. 10C is a configuration diagram illustrating blocks in an appliance that is an IoT home appliance.
FIG. 11 is a descriptive diagram illustrating the evolution into IoT home appliances that are connected via a constant connection communication network.
FIG. 12 is a descriptive diagram illustrating how functions related to an IoT home appliance are divided.
FIG. 13 is a second descriptive diagram illustrating an architecture of fourth generation home appliances and their cooperation with external services.
FIG. 14 is a third descriptive diagram illustrating an architecture of fourth generation home appliances and their cooperation with external services.
FIG. 15 is a table illustrating Wi-Fi and three schemes of LPWA.
FIG. 16 is a fourth descriptive diagram illustrating an architecture of fourth generation home appliances and their cooperation with external services.
FIG. 17 is a descriptive diagram illustrating an appliance that supports a plurality of communication schemes.
FIG. 18 is a descriptive diagram illustrating an appliance provided with communication modules for a plurality of communication schemes.
FIG. 19 is a descriptive diagram illustrating a plurality of access clouds corresponding to a plurality of communication schemes.
FIG. 20 is a descriptive diagram illustrating a first operation that involves switching among a plurality of communication schemes.
FIG. 21 is a flowchart illustrating a first process of a line selection device.
FIG. 22 is a descriptive diagram illustrating a second operation that involves switching among a plurality of communication schemes.
FIG. 23 is a flowchart illustrating a second process of a line selection device.
FIG. 24 is a descriptive diagram illustrating a third operation that involves switching among a plurality of communication schemes.
FIG. 25 is a descriptive diagram illustrating a fourth operation that involves switching among a plurality of communication schemes.
FIG. 26 is a flowchart illustrating a third process of a line selection device.
FIG. 27 is a descriptive diagram illustrating a fifth operation that involves switching among a plurality of communication schemes.
FIG. 28 is a flowchart illustrating a process in a home appliance cloud.
FIG. 29 is a flowchart illustrating a fourth process in a line selection device.
FIG. 30 is a descriptive diagram illustrating the communication data amount and the unit price per bit in carrier-based LPWA.

### DESCRIPTION OF EXEMPLARY EMBODIMENT

Hereinafter, an embodiment will be described in detail with reference to the drawings as appropriate. It is to be noted, however, that any description that is more elaborate than necessary may be omitted. For example, features that are already well known may not be described in detail, or duplicate descriptions of substantially identical configurations may be omitted. This is for keeping the following descriptions from becoming more lengthy than necessary and for facilitating understanding of a person skilled in the art.

It is to be noted that the inventor(s) provide the appended drawings and the following descriptions merely to help a person skilled in the art understand the present disclosure at a sufficient level, and these drawings and descriptions are not intended to limit the subject matter set forth in the claims.

In the following, the background that has led to the present invention and the technical problems to be solved by the present invention will be described in detail, and then the embodiment will be described.

### (Background That Has Led to the Present Invention)

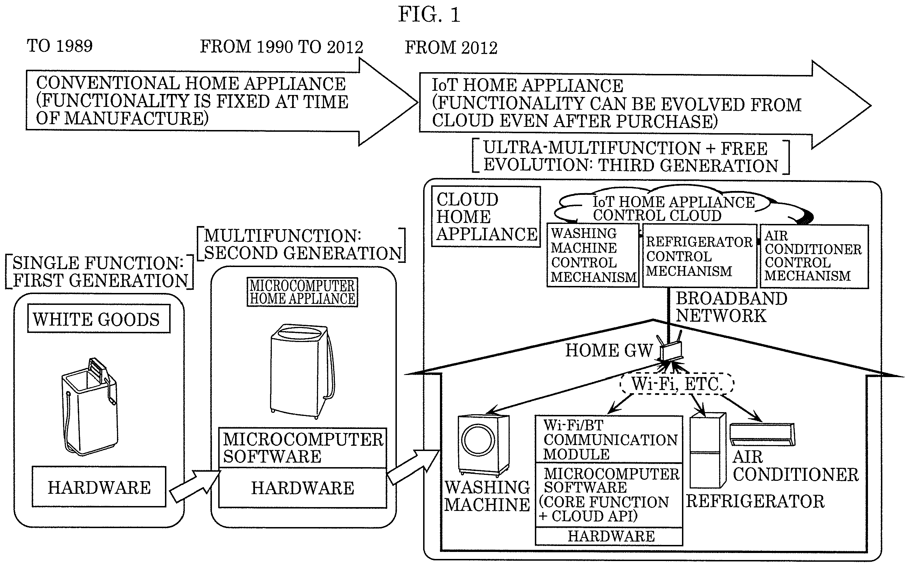

FIG. 1 is a descriptive diagram illustrating the evolution of home appliances.

FIG. 1 illustrates the evolution of the architecture of home appliances (white goods such as washing machines and refrigerators, air conditioners, humidifying air cleaners, and so on).

First generation (before 1990) home appliances were single-function products, as their hardware, such as a compressor or a motor, was implemented by a control logic constituted by a large-scale integrated circuit (LSI) or the like.

For second generation (from 1990 to around 2010) home appliances with embedded microcomputers, complex control became possible with the introduction of microcomputers and the creation of software for the microcomputers, and multifunction home appliances became available. However, the microcomputers could not be modified after the products were shipped out, and thus no modification or addition could be made to the products' functionality.

Third generation (after 2012) cloud home appliances are provided with a communication function through Wi-Fi, Bluetooth (registered trademark) (abbreviated below to BT), or the like and can connect to an Internet of Things (IoT) home appliance cloud via a home gateway (GW) and a broadband network. This makes it possible to update the software for the microcomputers within the products from the cloud even after the products have been shipped out. In addition, additions and modifications can be made to the functionality of an appliance after the appliance has been shipped out by, for example, updating the control mechanism for the appliance from the cloud without updating the software for the microcomputer. Here, an IoT home appliance cloud is a cloud (a collection of servers and networks) that controls home appliances via a communication channel, such as a broadband network, and is one of the cloud-based services.

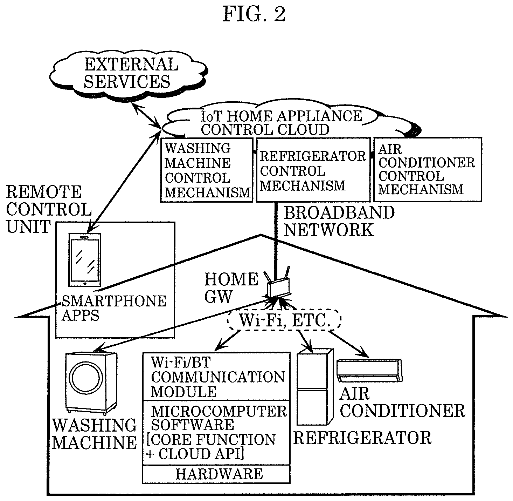

FIG. 2 is a descriptive diagram illustrating an example of an architecture of third generation home appliances and their cooperation with external services.

In the case of the third generation cloud home appliances (white goods such as washing machines and refrigerators, air conditioners, and humidifiers), a user can access each home appliance in the household from smartphone applications (APPs) via respective home appliance control mechanisms on an IoT home appliance cloud.

This makes it possible for the user to remotely monitor the operation status of each home appliance or remotely control the operation of each home appliance (starting, stopping, adjusting the temperature, dispensing the detergent, etc.) from the smartphone APPs. In addition, cooperation between external services, such as an EC service cloud or a monitoring service cloud, and the home appliance control mechanisms on the IoT home appliance cloud makes it possible to control the home appliances from the various cloud services or to retrieve operation information (logs or the like) of the home appliances and use this operation information in the external services.

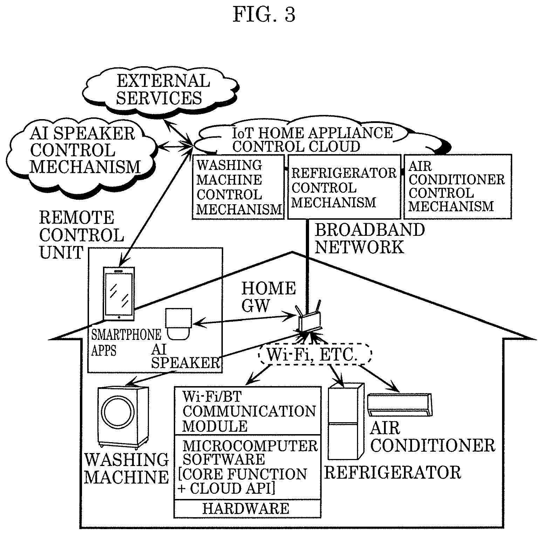

FIG. 3 is a descriptive diagram illustrating an example of an architecture of third generation home appliances and their cooperation with an artificial intelligence (AI) speaker.

In the case of the third generation cloud home appliances (white goods such as washing machines and refrigerators, air conditioners, and humidifiers), a user can access an AI speaker control mechanism on the cloud via a home GW from an AI speaker that implements a voice talk function, and the AI speaker control mechanism can access each home appliance control mechanism. This makes it possible for the user to remotely control each home appliance with a voice talk via the AI speaker.

### (Technical Problems to Be Solved)

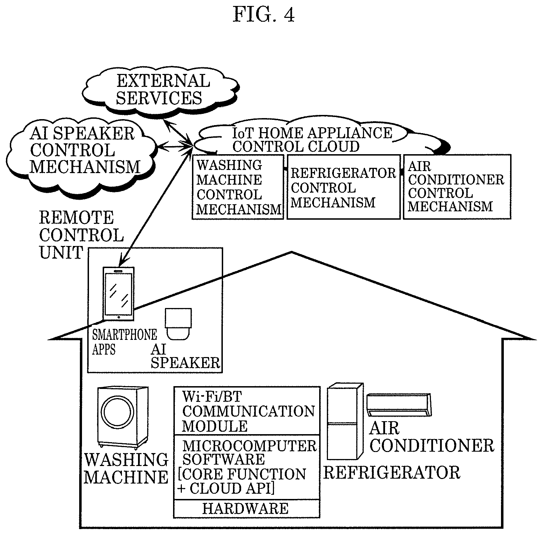

FIG. 4 is a descriptive diagram illustrating a first technical problem of the third generation home appliances. The first technical problem is that functions of the third generation home appliances cannot be used in a household with no Wi-Fi GW.

Even if a certain household has purchased a third generation cloud home appliance (white goods such as a washing machine or a refrigerator, an air conditioner, or a humidifier), if that household does not have a home GW, such as Wi-Fi, or has no connection to a broadband network, the cloud home appliance cannot connect to an IoT home appliance cloud. In this case, since the IoT home appliance cloud cannot access the home appliance, what the third generation home appliances aim for cannot be achieved. Specifically, the added value of the products cannot be increased through the evolution of their functionality provided from the cloud after the purchase. Therefore, the home appliance, even though it is an IoT home appliance, can be used only as a conventional second generation home appliance (microcomputer home appliance) with its fixed functionality set at the time of manufacture.

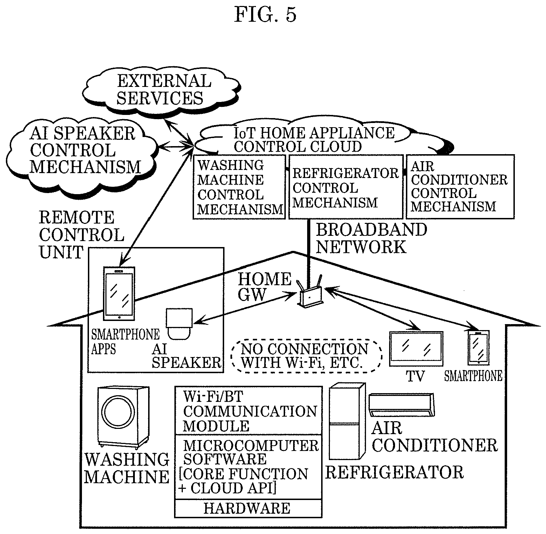

FIG. 5 is a descriptive diagram illustrating a second technical problem of the third generation home appliances. The second technical problem is that even if a Wi-Fi GW is available in a household, the user may fail to connect a third generation home appliance to the Wi-Fi GW.

With regard to an information device, such as a smartphone, a tablet, or a PC, or an AI speaker, if there is no internet connection through Wi-Fi or the like, the user cannot use the device's intended functions that he/she wants from that device. In addition, there are some smartphones (iPhone (registered trademark)) or some AI speakers that cannot be used unless the user connects them to the internet and enters the user information (an email address, an account, etc.). Since the user has purchased that device in order to use these functions, the user sets the user ID or configure the Wi-Fi setting and connects the device to the internet.

In the case of a smart TV as well, video distribution services, such as YouTube, Netflix, or Amazon Prime Video, are widely available, and most users (or an installation technician) configure the Wi-Fi setting in order to view the video contents from the video distribution services on a large-screen TV.

Yet, in the case of a cloud home appliance, its internet service that becomes available only upon the user configuring the complicated Wi-Fi setting may not be easily understandable, or the utility value of such an internet service may not seem like a necessary function to the user. Thus, there are many users who choose not to configure the internet connection from the beginning.

Furthermore, in a case where a user configures the Wi-Fi connection immediately after the purchase but later feels that the usability of the internet service is not that high, the user may cancel the connection or choose not to reconnect the home appliance to the internet service after it has been disconnected for some reason.

Accordingly, since it can be expected that nearly 100% of the information devices and the AI speakers are connected to the internet, various cloud services for them can be developed with an assumption that they are to be connected to the internet. In the case of TVs or home appliances, however, the connection rate of 100% can almost never be expected.

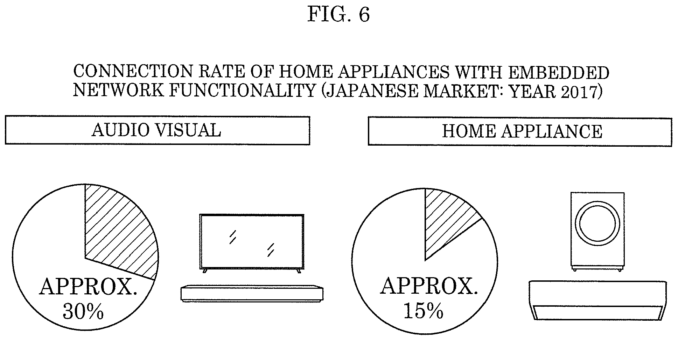

FIG. 6 is a descriptive diagram illustrating the network connection rate of home appliances (audio visuals (AVs) and home appliances) with embed network connection functionality.

As the above-described cloud home appliances are provided with a means of communication, such as Wi-Fi or Bluetooth, the cloud home appliances can connect to an IoT home appliance control cloud, and the use of various cloud services makes it possible to provide a customer experience that is not available through microcomputer home appliances. Thus, the customer satisfaction can be improved by providing a customer experience that outweighs the cost increase that arises as a means of communication, such as Wi-Fi, is provided in a cloud home appliance.

However, there arises a technical problem in that the user who owns an appliance chooses not to configure the aforementioned means of communication in many cases such as those described below. In other words, a cloud home appliance can provide only a customer experience that is the same as that provided by a microcomputer home appliance unless the cloud home appliance is connected to a cloud.
(1) In order to establish a Wi-Fi connection, the user needs to install a Wi-Fi access point in the house. However, some users connect to the internet only from a smartphone, that is, use only a communication network provided by a communication carrier, and those users may not own a Wi-Fi access point in the house.
(2) Even if there is a Wi-Fi access point in the house, it is hard to say that anyone can configure the Wi-Fi connection with ease, because of the complexity of an operation for configuring connections from home appliances, which includes entering a password for the Wi-Fi connection, for example.

Actually, as illustrated in FIG. 6, the network connection rate of cloud-enabled TVs or cloud home appliances in the Japanese market in 2017 is below 50%, and this reveals that many users use their cloud home appliances as microcomputer home appliances.

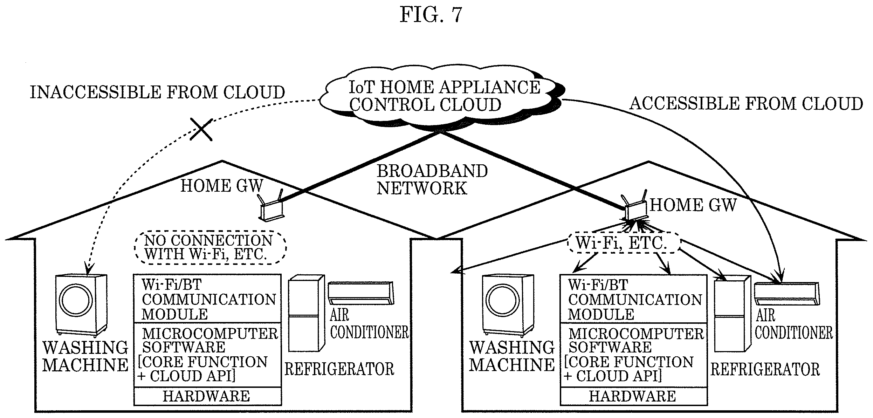

FIG. 7 is a descriptive diagram illustrating network connections and so on of cloud home appliances.

When a cloud home appliance is not connected to a cloud, the IoT home appliance control cloud cannot access the cloud home appliance. This makes it impossible to use the functions of the cloud home appliance that can increase the product's added value through the evolution of its functionality from the cloud after the purchase.

Therefore, even though it is a cloud home appliance, the user can use only the functions equivalent to those of a conventional microcomputer home appliance having fixed functionality set at the time of manufacture.

With cloud home appliances, a manufacturer is supposed to be able to take actions such as issuing an emergency stop instruction to a target home appliance, updating firmware remotely, or emailing a notification to the user in a case where a recall or the like is issued. However, under the current situation where the connection rate is low, the manufacturer is often unable to use the function of controlling the cloud home appliances from the IoT home appliance control cloud. Therefore, the functions of remote maintenance, recall notification, or the like that can be achieved if remote monitoring or control is available do not work sufficiently for all the target cloud home appliances.

Accordingly, while the situation is that cloud home appliances provided with a means of communication, such as Wi-Fi or BT, often fail to be connected to a cloud in reality, various means of communication for turning a device or a sensor other than a home appliance into an IoT device have become available.

In particular, a means of wireless communication, collectively referred to as Low Power Wide Area (LPWA) technology, developed specifically for use in the IoT is in practical use and is attracting an attention as a communication scheme suitable in the IoT era.

Some characteristics of the LPWA wireless technology include the following. The cost of a terminal can be reduced through small-scale semiconductor implementation, as compared to Long Term Evolution (LTE). The number of base stations can be reduced through low-rate modulation that can obtain a very long communication distance (up to 10 km). Thus, the cost of wireless circuits and the cost of infrastructure can both be reduced. However, because of the use of a technique that improves the reception sensitivity by reducing the transmission rate, the amount of data that can be transmitted is small.

Providing the LPWA wireless technology in a home appliance renders it unnecessary for the user to have a contract for an internet line. Thus, a home appliance may be directly connected to a base station, and a service connected to a cloud server may be achieved at a very low cost.

LPWA is divided into cellular LPWA and non-cellular LPWA. Cellular LPWA uses a frequency band (a licensed band) assigned to a cellular carrier and is provided as one of cellular lines (LTE or the like).

Non-cellular LPWA uses LPWA wireless technology by taking advantage of the fact that no channel usage fees are required when using non-licensed bands that exist in each country. A non-licensed band is shared with other wireless systems, and thus a restriction for preventing an exclusive use of a channel is defined in each country's radio law.

### (1) Cellular LPWA

### (1-1) NB-IoT

NB-IoT has originated from the GSM (registered trademark) (2G) scheme. MB-IoT adopts the advantage of low transfer rates and LTE communication sequences and is dedicated to data transfer for IoT applications. The channel spacing is set to 200 kHz, which is the same as the channel spacing of GSM, and this makes it easier to switch to the GSM channel. The peak rate in uplink transmission is set to a low rate of 62.5 kbps, and data is received cumulatively through a plurality of repetitive transmissions (64 times). Thus, the sensitivity point is improved. A maximum link budget is as large as 150 dB. The transmission power is limited to 100 mW (2 W in GSM), and this can limit the peak current and allows NB-IoT to operate with a single battery.

### (1-2) LTE-M (CAT-M)

LTE-M (CAT-M) has originated from the LTE (4G) scheme and carries out communication with the use of the minimum channel spacing (1.4 MHz) of LTE. LTE-M (CAT-M) supports a slot configuration of LTE and can thus be mixed with a conventional LTE communication slot. The peak rate in uplink transmission is set to a low rate of 1 Mbps, and data is received cumulatively through repetitive transmissions. Thus, the sensitivity point is improved. A maximum link budget is 150 dB.

Since the transmission rate is somewhat high, the power consumed when LTE-M (CAT-M) is operated on a battery is smallest. The transmission power is 200 mW.

### (2) Non-cellular LPWA

### (2-1) LoRa

LoRa uses a conventional low-power wireless band (ISM band), but the reception sensitivity is improved through ultralow rate modulation. The ultralow rate modulation is achieved through the use of special diffusion modulation called LoRa chirp modulation. Characteristics of the LoRa chirp modulation make it possible to achieve a low transmission rate of 250 bps and a diffusion band of 125 kHz and to obtain a high sensitivity with high noise resistance. In addition, a plurality of data rates can be selected in the same bandwidth, and data at these data rates can be received simultaneously through a single channel. Thus, the communication capacity is improved. A maximum link budget is 152 dB. The transmission power is 20 mW.

LoRa inherits the characteristics of conventional low-power wireless technology (low power, low current peak) and can be operated for 10 years with a single battery or can be operated with a coin battery.

The specifications are standardized through the LoRa Alliance, which allows for interconnections among service providers.

### (2-2) SIGFOX

SIGFOX uses a conventional low-power wireless band (ISM band), but the reception sensitivity is improved through ultralow rate modulation. The ultralow rate modulation is achieved through narrow band FSK modulation, and some work on a digital demodulation process on a base station side has solved a problem of frequency errors. In the SIGFOX modulation, the uplink is at a fixed rate of 100 bps, and the downlink is at a fixed rate of 600 bps. An influence of jamming noise is suppressed by transmitting data in a plurality of instances with varying frequencies. The rates are fixed, and simultaneous multiplexed reception is not available. Thus, the communication capacity is relatively small. A maximum link budget is 158 dB. The transmission power is 20 mW.

SIGFOX inherits the characteristics of conventional low-power wireless technology (low power, low current peak) and can be operated for 10 years with a single battery or can be operated with a coin battery.

SIGFOX has its unique specifications and occupies a base station with SIGFOX alone.

SIGFOX is capable of only one-way communication. Thus, SIGFOX can be used for the sensor-based IoT but is not suitable for IoT home appliances.

### (Embodiment)

Hereinafter, a system that can appropriately select, from a plurality of networks, a network to be used to connect an appliance and a control cloud will be described.

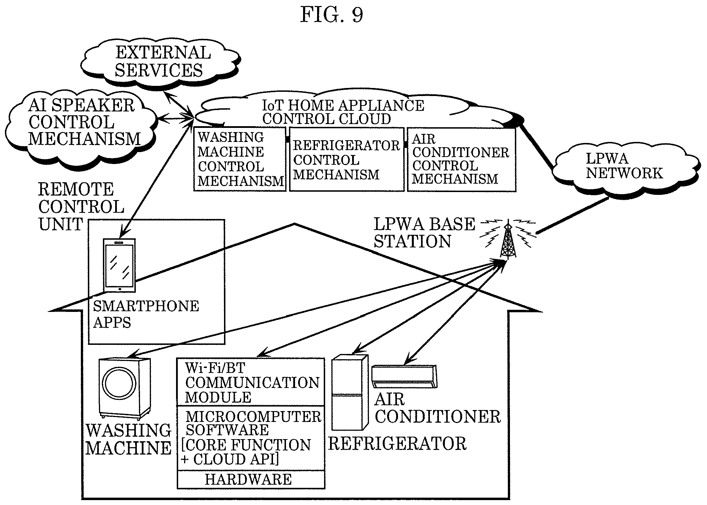

FIG. 9 is a first descriptive diagram illustrating an architecture of fourth generation home appliances (constant connection IoT home appliances) and their cooperation with external services. Examples of home appliances include white goods, such as a washing machine or a refrigerator, an air conditioner, and a humidifier. A home appliance will also be referred to simply as an appliance.

In order to solve the technical problems of the third generation home appliances, all the users who use the home appliances need to have a Wi-Fi GW, the services that make the users want to connect the home appliances to the internet to keep using them need to be developed, and configuring the Wi-Fi setting needs to be simplified.

In recent years, with the rise of various means of communication, a means of communication collectively referred to as Low Power Wide Area (LPWA) technology that allows a home appliance to be connected to a cloud more easily than before is suggested and attracting attention.

With the characteristics of LPWA, the user can use LPWA without configuring LPWA, a very long communication distance (up to 10 km) can be achieved, and a connection can always be established to a base station as long as the user is within a range where radio signals can reach.

With the fourth generation home appliances (constant connection IoT home appliances), as a home appliance is provided with the LPWA technology, the home appliance can connect to a cloud without the user having a Wi-Fi GW or configuring the complicated Wi-Fi setting, and the functionality can be extended from the cloud after the home appliance has been purchased.

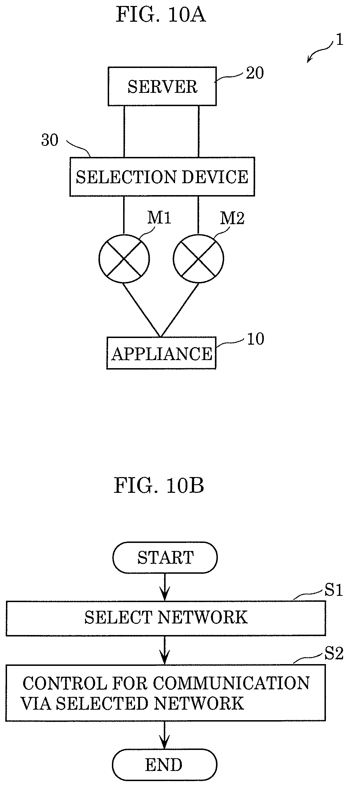

FIG. 10A is a configuration diagram illustrating appliance management system 1 that includes appliance 10 and server 20. Appliance 10 is an IoT home appliance, and server 20 is a control cloud.

As illustrated in FIG. 10A, appliance management system 1 includes appliance 10, server 20, and selection device 30.

Appliance 10 is an appliance managed by appliance management system 1.

Server 20 is a server device that manages appliance 10. Server 20 can be connected to appliance 10 via a plurality of networks M1 and M2 that differ from each other. Server 20 corresponds to a control cloud.

Selection device 30 is a device provided in a communication channel that connects server 20 and each of one or more of the plurality of networks M1 and M2. Selection device 30 selects, from the plurality of networks M1 and M2, one network to be used for communication between appliance 10 and server 20 based on a comparison of communication-related properties of the plurality of networks M1 and M2 and causes appliance 10 and server 20 to communicate via the selected one network.

Herein, a "network" may also be referred to as a "line", or a "line" may also be referred to as a "network".

FIG. 10B is a flowchart illustrating a control method to be executed by appliance management system 1.

As illustrated in FIG. 10B, in step S1 (selection step), selection device 30 selects, from the plurality of networks M1 and M2, one network to be used for communication between appliance 10 and server 20 based on a comparison of communication-related properties of the plurality of networks M1 and M2.

In step S2 (control step), selection device 30 causes appliance 10 and server 20 to communicate via the selected one network.

Thus, appliance management system 1 can appropriately select, from a plurality of networks, a network to be used to connect appliance 10 and server 20 that is a control cloud.

In the following, appliance management system 1 and so on will be described in further detail.

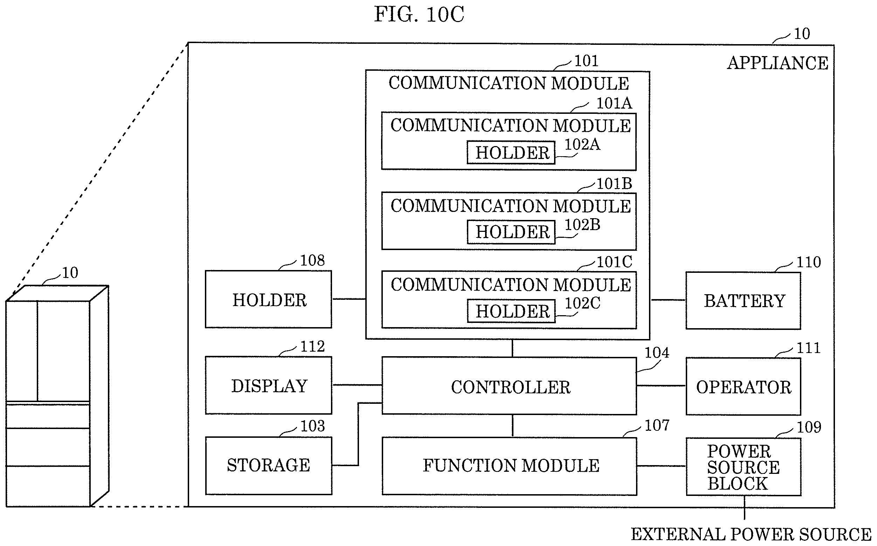

FIG. 10C is a configuration diagram illustrating blocks in appliance 10 that is an IoT home appliance.

As illustrated in FIG. 10C, appliance 10 includes communication module 101, storage 103, controller 104, function module 107, holder 108, power source block 109, battery 110, operator 111, and display 112.

Communication module 101 includes a plurality of communication modules. The plurality of communication modules include a long-distance communication module and a short-distance communication module. The long-distance communication module is a communication module for long-distance wireless communication. The short-distance communication module is a communication module for short-distance wireless communication. With each of this plurality of communication modules, appliance 10 can be connected to server 20, which is a control cloud that manages appliance 10. Specifically, communication module 101 includes a plurality of wireless communication modules 101A, 101B, and 101C. Communication modules 101A, 101B, and 101C include, respectively, holders 102A, 102B, and 102C. Holders 102A, 102B, and 102C each hold a module ID of a corresponding one of the communication modules. Information necessary for long-distance communication carried out by the long-distance communication module (access point name (APN) and so on) is set from the beginning. Meanwhile, information necessary for short-distance communication carried out by the short-distance communication module (service set identifier (SSID), channel, and so on) is not set at the beginning. With regard to the short-distance communication, the content of information necessary for the short-distance communication differs depending on the location where the short-distance communication is used (home, office, or the like). Therefore, information corresponding to the location where the short-distance communication is used is usually set by the user.

When it is said that communication module 101A and so on are operated, this means that power is supplied to a given communication module and this communication module is made to perform, for example but not limited to, a process related to transmission and reception of radio signals including transmission and reception frames, a process of generating a frame to be transmitted, a process of reading a received frame, and a process related to establishment of a communication connection.

Controller 104 acquires communication available or unavailable information. The communication available or unavailable information includes information indicating whether the plurality of communication modules 101A, 101B, and 101C are each connected to a network and information indicating whether communication with server 20 where the plurality of communication modules 101A, 101B, and 101C are each used is available.

Storage 103 stores communication-related properties of each of the plurality of networks. For example, the properties include an index indicating the level of stability of communication, information indicating the speed of communication, information indicating the cost required for communication, or the like.

Operator 111 is an input device that receives a user operation on appliance 10 and receives information corresponding to the received user operation.

Controller 104 is a processor that controls an operation of appliance 10 based on control information received from server 20, which is a control cloud, by communication module 101. Controller 104 controls communication of communication module 101, performs a process related to information received by operator 111, or perform a process related to an image to be displayed on display 112.

Function module 107 is a module that exhibits the functionality of appliance 10.

Holder 108 is a storage device that holds an ID unique to each appliance 10.

Power source block 109 receives power from an external power source and supplies the power to the components in appliance 10.

Battery 110 is a battery that supplies power to communication module 101 and so on. Battery 110 may be a primary battery or a secondary battery.

Display 112 is a display device that displays, on its display screen, various pieces of information in the form of an image.

The configuration of appliance 10 will be described in detail with a refrigerator serving as an example.

Appliance 10, or the refrigerator, is connected to a network to serve as an IoT device, yet appliance 10 is still used as a home appliance. Thus, appliance 10 includes various modules for achieving its original functions as a home appliance. In the case of a refrigerator, such modules include a compressor for cooling the inside of the refrigerator, an illumination device for illuminating the inside of the refrigerator when its door is opened, and a sensor for measuring the temperature and the humidity inside the refrigerator. These modules correspond to function module 107. A large-size home appliance, such as a refrigerator or an air conditioner, is typically connected to an external power source via power source block 109.

A recent home appliance is typically provided with controller 104 that includes a microcomputer or a processor for controlling various useful functions. For example, in the case of a refrigerator with an ice-making function, whether ice should be made is determined with a sensor provided inside a dedicated tray for storing the made ice, and an operation for making additional ice is performed. In order to perform such a detailed operation, appliance 10 is controlled by a microcomputer or a processor and software executed by the microcomputer or the processor.

Furthermore, appliance 10 includes display 112 that presents various pieces of information to the user or operator 111 that allows the user to input complex operations.

A display in a conventional appliance displays only a minimum required amount of information, such as indication of any anomalous condition or the presence of electrical continuity, through a limited method, such as a display with a plurality of lamps or with a several-digit number. In addition, an operation involves only several buttons, and the user performs a simple operation, such as inputting an instruction for quick-freezing or resetting when an anomaly occurs.

In contrast, appliance 10 includes a small-size touch panel display as operator 111 or display 112 and can display more complex conditions or accept various settings.

What gives appliance 10 its characteristic property as an IoT home appliance is communication module 101. Communication module 101 holds, in holders 102A, 102B, and 102C, the communication module IDs that allow the respective devices, that is, respective communication modules 101A, 101B, and 101C to be identified and enables a connection to the internet via any one or more of various means of communication, such as Wi-Fi or LTE. In a case where a plurality of communication modules are provided, each communication module is assigned an independent communication module ID, and this communication module ID serves as a communication identifier, like a phone number in the case of LTE, for example, depending on the communication schemes. As appliance 10 is connected to the internet, appliance 10 can send various pieces of information collected by controller 104 to a server or acquire information required to control appliance 10 from the server. Furthermore, in recent years, technology called LPWAhas become available, and this technology enables a network connection with low power consumption, while the communication speed is low. In LPWA, the presence of battery 110 inside appliance 10 separate from an external power source enables minimum required communication even when appliance 10 is not connected to an external power source. In addition, a specific home appliance may need to be designated and controlled depending on the communication, and thus appliance 10 may include holder 108 that holds an ID unique to each appliance 10.

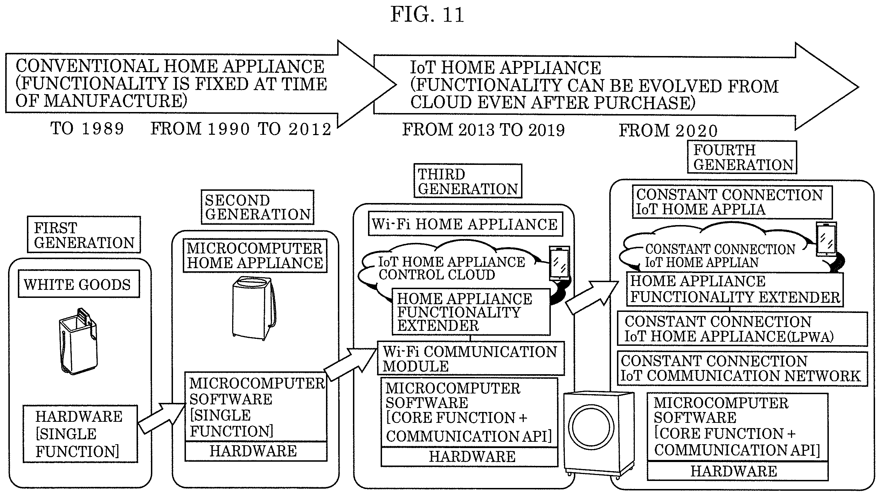

FIG. 11 is a descriptive diagram illustrating the evolution into IoT home appliances that are connected via a constant connection communication network. FIG. 11 illustrates the evolution of the architecture of home appliances (white goods such as washing machines and refrigerators, air conditioners, humidifying air cleaner, and so on).

The first generation (before 1990) home appliances are single-function products that are implemented by mechanics, such as a compressor or a motor, and a control logic.

The second generation (up to around 2010) home appliances with embedded microcomputers are capable of complex control, as software for the microcomputers are created. Therefore, although they are multifunction home appliances, it is difficult to add or modify their functionality through a change in the software for the microcomputers after the home appliances are shipped out.

The third generation (after 2012) cloud home appliances are provided with a communication functional through Wi-Fi, Bluetooth, or the like and can connect to an IoT home appliance cloud via a home GW and a broadband network. Therefore, even after an appliance has been shipped out, its functionality can be added or updated by, for example, updating the software for the microcomputer within the appliance from the cloud or by updating the control mechanism of the appliance from the cloud without updating the software for the microcomputer. However, not all the products that have been shipped out can be connected via Wi-Fi or the like, and the cloud function is often unavailable.

In the case of the fourth generation (after 2020) constant connection IoT home appliances provided with a constant connection function through LPWA or the like, all the shipped products can be connected, and thus the cloud function is available in every product.

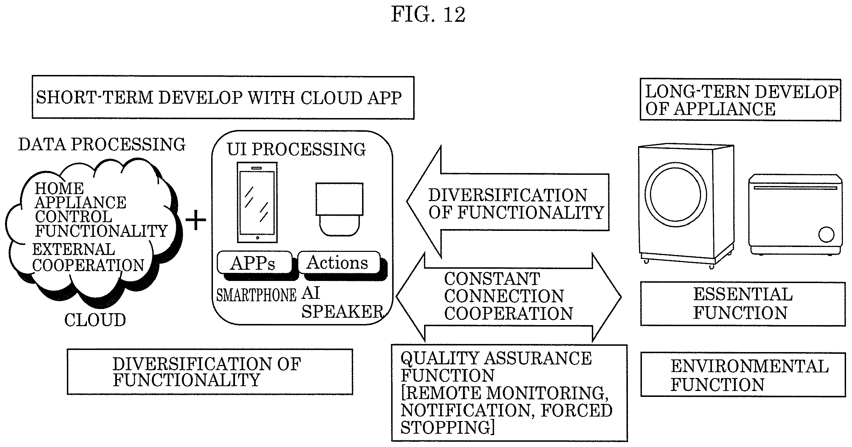

FIG. 12 is a descriptive diagram illustrating how the functions related to an IoT home appliance are divided.

In the case of the fourth generation cloud home appliances (white goods such as washing machines and refrigerators, air conditioners, humidifiers), the functions are divided between the cloud/smartphone and the appliance (outsourcing of functions) by connecting the home appliance and a UI device, such as a cloud or a smartphone, with a constant connection function. Therefore, the functionality and the performance of the home appliances can be improved even after the products have been shipped by making modifications or additions to the functionality from the cloud.

Since all the shipped products can be connected constantly, all the products can be remotely monitored or remotely controlled even after they have been shipped out. Therefore, a significant improvement in the quality assurance function can be expected.

Even if a product is to be recalled unfortunately, the product can be traced after having been shipped out, and the user of the target product can be informed of a mechanical problem, or the product can be forcibly stopped, for example. This makes it possible to significantly reduce the recall cost.

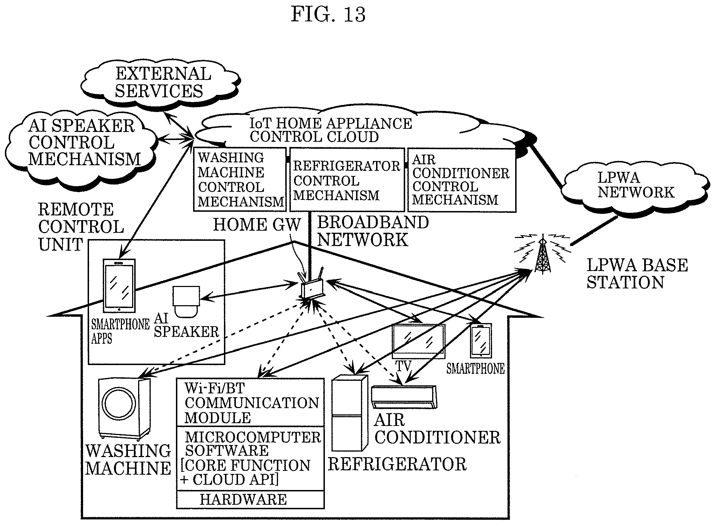

FIG. 13 is a second descriptive diagram illustrating an architecture of fourth generation home appliances (constant connection IoT home appliances) and their cooperation with external services.

LPWA has excellent characteristics as described above, but since LPWA employs a technique of improving the reception sensitivity by reducing the transmission rate, the amount of data that can be transmitted is less than the amount of data that can be transmitted through Wi-Fi or LTE. Therefore, the fourth generation home appliances (constant connection IoT home appliance) become capable of communication suitable for its intended use as they are provided with not only LPWA but also Wi-Fi, as in the case of the third generation home appliances.

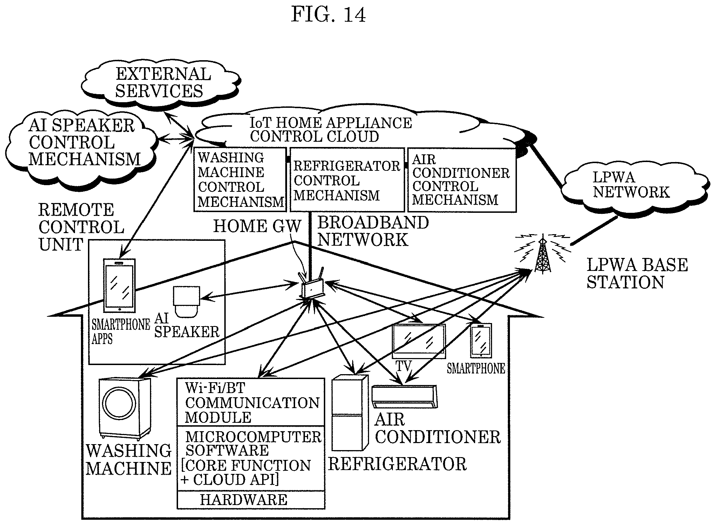

FIG. 14 is a third descriptive diagram illustrating an architecture of fourth generation home appliances and their cooperation with external services.

With regard to one of the important technical problems with the third generation home appliances, that is, that the third generation home appliances require their users to configure the complicated Wi-Fi setting, the configuration can be simplified by utilizing LPWA in the Wi-Fi setting, as illustrated in the following examples.
(1) The Wi-Fi setting is entered in the cloud, and the fourth generation home appliances (constant connection IoT home appliances), using the LPWA, acquire the Wi-Fi setting from the cloud and connect to the Wi-Fi GW.
(2) The Wi-Fi setting is entered in one fourth generation home appliance (constant connection IoT home appliance), and this fourth generation home appliance transmits the Wi-Fi setting to other appliances within the house via LPWA. The other appliances connect to the Wi-Fi GW by using the received setting.

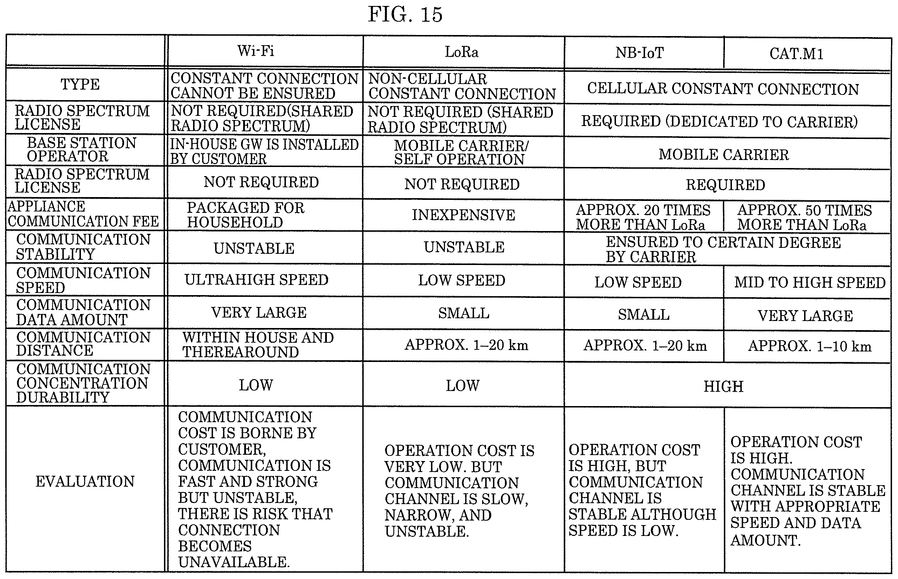

As illustrated in FIG. 15, in order to achieve a constant connection IoT home appliance, a combination of LPWA technology and Wi-Fi is considered to be appropriate. However, the three LPWA technologies differ in their characteristics or properties. Therefore, placing a heavy weight on the communication quality leads to an increased cost, or placing a heavy weight on the cost leads to a low communication quality, which may pose the risk of not being able to ensure stable communication, for example. Therefore, it is difficult to select one LPWA technology for a constant connection IoT home appliance.

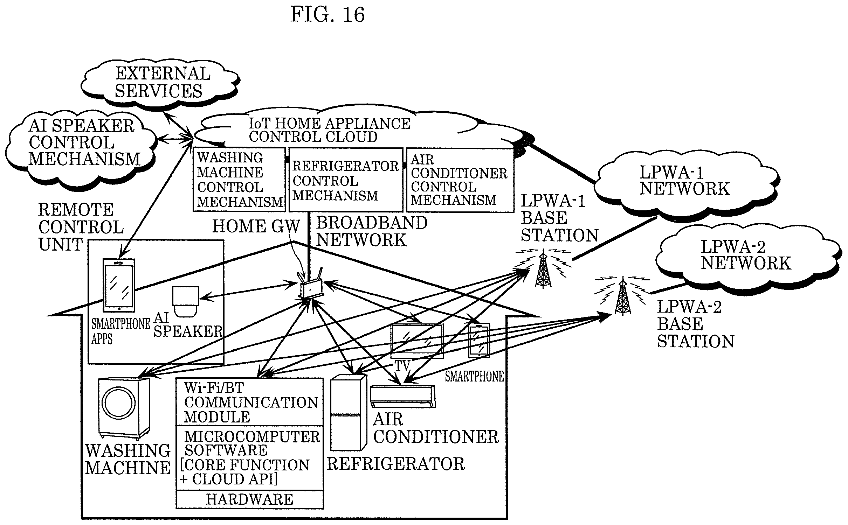

FIG. 16 is a fourth descriptive diagram illustrating an architecture of fourth generation home appliances and their cooperation with external services.

As described above, one of the technical problems with LPWA is that the amount of data that can be transmitted is less than the amount of data that can be transmitted through Wi-Fi or the like. This technical problem, however, can be solved if a plurality of LPWA networks are used simultaneously. LPWA is roughly divided into cellular LPWA and non-cellular LPWA. Cellular LPWA uses a frequency band (licensed band) assigned to a cellular carrier, and thus the amount of data that can be transmitted with cellular LPWA is larger than the amount of data that can be transmitted with non-cellular LPWA. Meanwhile, non-cellular LPWA does not require a license, and thus a station can be installed with a home appliance manufacturer being in charge, which makes it easier to manage the cover area. Providing, in addition to Wi-Fi, at least one or more LPWA networks makes it possible to achieve a constant connection IoT home appliance that can remain connected to a cloud while the home appliance is in operation.

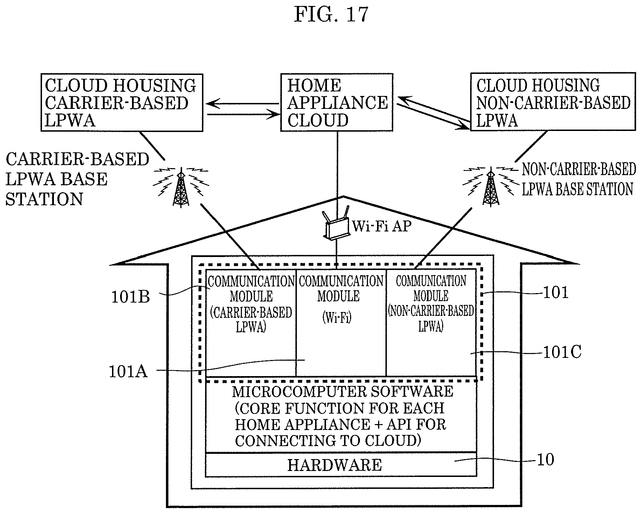

FIG. 17 illustrates appliance 10 that is provided with three types of communication modules for Wi-Fi, carrier-based LPWA, and non-carrier-based LPWA, and clouds that house the respective communication schemes. In this example, communication module 101A corresponds to a communication module for Wi-Fi, communication module 101B corresponds to a communication module for carrier-based LPWA, and communication module 101C corresponds to a communication module for non-carrier-based LPWA. It is to be noted that one or more additional communication schemes may be added or there may be just two communication schemes.

In FIG. 17, "HOME APPLIANCE CLOUD" is a cloud that manages or controls appliance 10. The home appliance cloud manages information related to appliance 10 or controls appliance 10 no matter which network, such as Wi-Fi or LPWA, is used.

"CLOUD HOUSING CARRIER-BASED LPWA" is a cloud that houses appliance 10 to be connected to the home appliance cloud via the communication module for carrier-based LPWA. Information related to appliance 10 (control information, status of the home appliance, and so on) is transmitted to and received from the home appliance cloud via the cloud that houses carrier-based LPWA.

"CLOUD HOUSING NON-CARRIER-BASED LPWA" is a cloud that houses appliance 10 to be connected to the home appliance cloud via the communication module for non-carrier-based LPWA. Information related to appliance 10 (control information, status of the home appliance, and so on) is transmitted to and received from the home appliance cloud via the cloud that houses non-carrier-based LPWA.

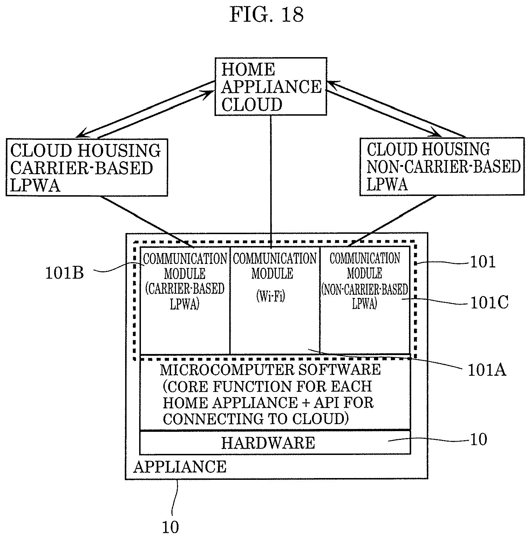

FIG. 18 is a descriptive diagram illustrating an appliance provided with communication modules for a plurality of communication schemes.

In adopting various communication schemes (Wi-Fi, Bluetooth, LPWA, and so on) in a home appliance, each communication scheme has its advantages and disadvantages. Therefore, proposed is a configuration in which adopting two or more communication schemes in a home appliance allows an optimal communication scheme to be selected in accordance with how the home appliance turned into an IoT device is used, an environment where the home appliance is installed, or an application or a service for the home appliance.

FIG. 18 illustrates a home appliance that is provided with three types of communication modules for Wi-Fi, carrier-based LPWA, and non-carrier-based LPWA, and clouds that house the respective communication schemes. (One or more additional communication schemes may be added, or there may be just two communication schemes.)

In FIG. 18, "HOME APPLIANCE CLOUD" is a cloud that manages or controls appliance 10. The home appliance cloud manages information related to appliance 10 or controls appliance 10 no matter which communication network, such as Wi-Fi or LPWA, is used.

"CLOUD HOUSING CARRIER-BASED LPWA" is a cloud that houses appliance 10 to be connected to the home appliance cloud via the communication module for carrier-based LPWA. Information related to appliance 10 (control information, status of the home appliance, and so on) is transmitted to and received from the home appliance cloud via the cloud that houses carrier-based LPWA. Carrier-based LPWA includes NB-IoT or Cat-M.

"CLOUD HOUSING NON-CARRIER-BASED LPWA" is a cloud that houses appliance 10 to be connected to the home appliance cloud via the communication module for non-carrier-based LPWA. Information related to appliance 10 (control information, status of the home appliance, and so on) is transmitted to and received from the home appliance cloud via the cloud that houses non-carrier-based LPWA. Non-carrier-based LPWA includes LoRa or SIGFOX.

Data transmitted from appliance 10 is collected to the home appliance cloud via the three routes illustrated in FIG. 18.

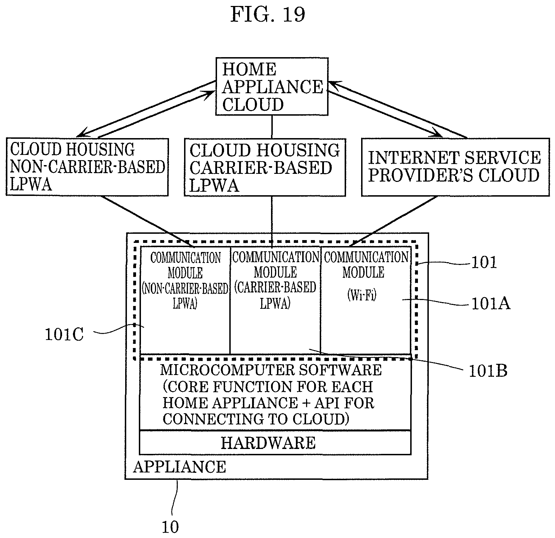

FIG. 19 is a descriptive diagram illustrating a plurality of access clouds corresponding to a plurality of communication schemes. An access cloud is a cloud (a collection of servers and networks) for connecting appliance 10 to the home appliance cloud or the internet. Specifically, an access cloud is a cloud located between appliance 10 and the home appliance cloud or the internet.

FIG. 19 illustrates a configuration that includes three access clouds and appliance 10 provided with three communication functions, which are communication modules 101A, 101B, and 101C. In this example, the three access clouds are clouds that connect appliance 10 and the home appliance cloud. The properties of each access cloud are described below.

The cloud that houses carrier-based LPWA is a cloud operated by a cellular carrier and connected wirelessly to communication module 101B (communication module for carrier-based LPWA) provided in appliance 10. The cellular scheme allows for a relatively large communication capacity and can provide highly reliable communication, but the communication cost is generally high.

The cloud that houses non-carrier-based LPWA is a cloud that connects non-cellular wireless devices and is connected wirelessly to communication module 101C (communication module for non-carrier-based LPWA) provided in appliance 10. The cloud that houses non-carrier-based LPWA includes LoRa, SIGFOX, or the like. This scheme allows for a relatively small communication capacity, and its communication reliability is somewhat inferior. The communication cost, however, is remarkably low.

Clouds of internet service providers include a fiber optic cable line or a CATV line, and it is often the case that wiring is provided with a cable from the cloud to a house. The communication capacity is very large, and this even allows for transmission of moving images. In general, a person living in the house enters into a contract with an internet service provider and pays at a fixed rate, and thus no additional fee is incurred even when appliance 10 is newly connected.

In using the three access clouds described above, in order to keep the connection cost low for the user, it is effective to eliminate any additional cost by using a line of the internet service provider or to reduce the connection cost by using non-carrier-based LPWA.

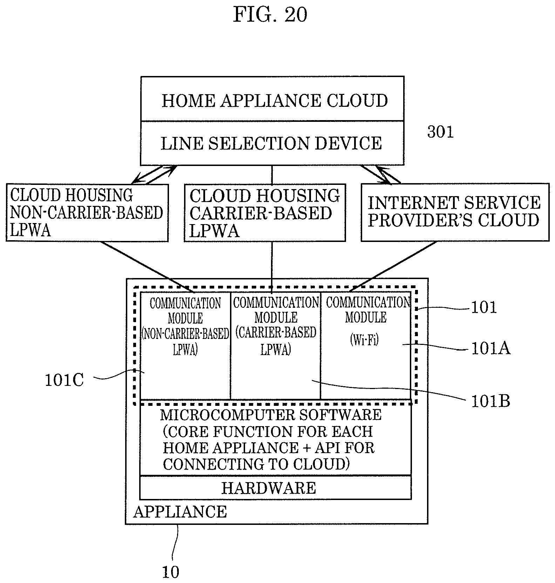

FIG. 20 is a descriptive diagram illustrating a first operation that involves switching among a plurality of communication schemes.

FIG. 20 illustrates a configuration according to the present disclosure. One of the features of the present disclosure lies in the presence of line selection device 301 provided as a part of the home appliance cloud. Line selection device 301 corresponds to selection device 30. Line selection device 301 is provided in a communication channel that connects the home appliance cloud and each of a plurality of networks. Line selection device 301 operates as follows.

Line selection device 301 determines the type of network that allows a required communication speed to be obtained and that minimizes the communication cost, as viewed from the user of appliance 10 and the provider of the home appliance cloud. Specifically, this determination is made as follows.

If the user of appliance 10 has a broadband line of an internet service provider installed in his/her house, communication module 101A for Wi-Fi of appliance 10 becomes connected to the home appliance cloud through the broadband line of the internet service provider via a Wi-Fi base station (access point (AP)) (not illustrated). In this case, line selection device 301 selects the cloud of the internet service provider so that appliance 10 is connected to the home appliance cloud via the internet service provider. In other words, in a case where a plurality of networks include a first network that partially includes a short-distance wireless communication (i.e., Wi-Fi) link to be established by appliance 10, line selection device 301 selects the first network as one network that connects appliance 10 and the home appliance cloud.

Meanwhile, in a case where the home appliance cloud has determined that there is no connection provided by an internet service provider (i.e., no Wi-Fi connection), line selection device 301 compares the communication-related properties of carrier-based LPWA and non-carrier-based LPWA and selects either one of carrier-based LPWA and non-carrier-based LPWA for the connection between appliance 10 and the home appliance cloud.

For example, in a case where the amount of data to be communicated is relatively small or the instantaneity is not required, line selection device 301 selects non-carrier-based LPWA, which costs relatively less. This is because line selection device 301 selects the one that requires a lower cost for communication based on the comparison of the communication-related properties of carrier-based LPWA and non-carrier-based LPWA, or specifically, the comparison of the communication speeds and the costs required for the communication.

For example, in a case where the amount of data is relatively large, line selection device 301 selects carrier-based LPWA. This is because line selection device 301 selects the one that has a higher communication speed, that is, the one that requires less time for the communication based on the comparison of the communication-related properties of carrier-based LPWA and non-carrier-based LPWA, or specifically, the comparison of the communication speeds. It is to be noted that a threshold for determining whether the amount of data is large or small is specified for line selection device 301 within the home appliance cloud or from the outside.

A threshold for making a switch between carrier-based LPWA and non-carrier-based LPWA can be modified as appropriate in accordance with a change in the line cost or the like.

In this manner, in a case where a plurality of networks include a second network that is a network for long-distance wireless communication having a communication speed higher than a predetermined communication speed and a third network that is a network for long-distance wireless communication having a communication speed lower than the communication speed of the second network, line selection device 301 may select (a) the second network as one network that connects appliance 10 and the home appliance cloud when the amount of data to be communicated is greater than a first threshold or (b) the third network as the one network when the amount of data to be communicated is less than or equal to the first threshold.

In this case, line selection device 301 may further acquire cost information indicating the cost required for the communication that involves the second network and set the first threshold to a higher value for higher values of the cost indicated by the acquired cost information.

In a case where a plurality of networks include a second network that is a network for long-distance wireless communication having a communication speed higher than a predetermined communication speed and a third network that is a network for long-distance wireless communication having a communication speed lower than the communication speed of the second network, line selection device 301 may select (a) the second network as one network that connects appliance 10 and the home appliance cloud when the time required for the communication is greater than a second threshold or (b) the third network as the one network when the time required for the communication is less than or equal to the second threshold.

In addition, line selection device 301 may further acquire cost information indicating the cost required for the communication that involves the second network and set the second threshold to a higher value for higher values of the cost indicated by the acquired cost information.

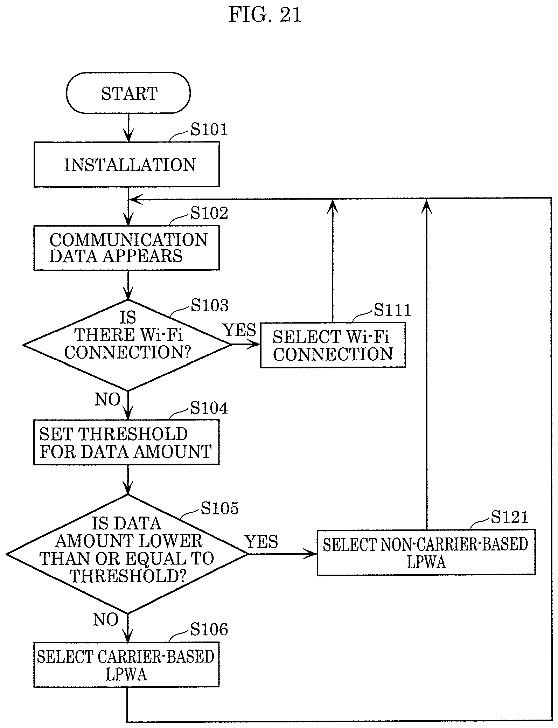

FIG. 21 is a flowchart illustrating a first process of line selection device 301. The first process illustrated in FIG. 21 is an example of a process performed when line selection device 301 determines the type of a network.

Appliance 10 is installed (step S101). Then, when communication data appears (step S102), appliance 10 determines whether there is a Wi-Fi connection (step S103). Specifically, this determination can be made by determining whether appliance 10 is connected to a Wi-Fi base station as information required for the communication is set in communication module 101A for Wi-Fi.

In a case where it is determined in step S103 that there is a Wi-Fi connection (YES in step S103), line selection device 301 selects the Wi-Fi connection, that is, selects communication module 101A for Wi-Fi (step S111).

In a case where it is determined in step S103 that there is no Wi-Fi connection (NO in step S103), line selection device 301 sets a threshold for the amount of data (step S104). This threshold is a threshold for making a switch between carrier-based LPWA and non-carrier-based LPWA.

It is determined whether the amount of data to be communicated is less than or equal to the threshold (step S105). In a case where it is determined that the amount of data to be communicated is less than or equal to the threshold (YES in step S105), line selection device 301 selects non-carrier-based LPWA, that is, selects communication module 101C for non-carrier-based LPWA (step S121).

In a case where it is determined in step S105 that the amount of data to be communicated is neither less than nor equal to the threshold (NO in step S105), line selection device 301 selects carrier-based LPWA, that is, selects communication module 101B for carrier-based LPWA (step S106).

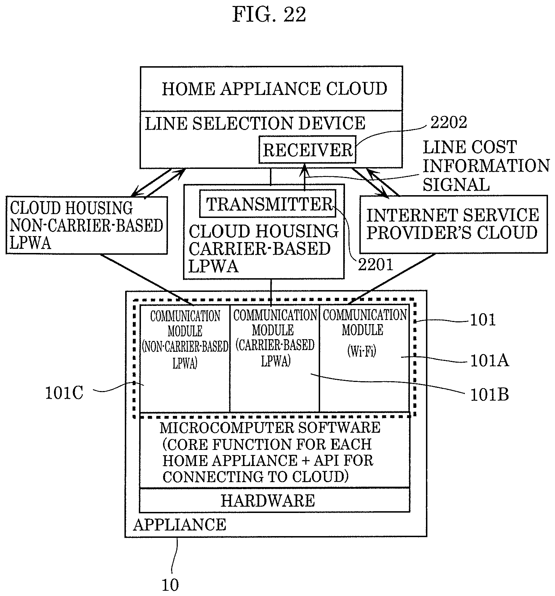

FIG. 22 is a descriptive diagram illustrating a second operation that involves switching among a plurality of communication schemes.

FIG. 22 illustrates a configuration according to the present disclosure. One of the features of the present disclosure lies in that a line cost information signal, that is, a signal that includes information on the line cost is sent from transmitter 2201 included in the cloud that houses carrier-based LPWA to receiver 2202 included in line selection device 301. This line cost information signal may be transmitted through server-to-server communication or through a separate line.

Carrier-based LPWAis a cellular carrier connection, and it is conceivable that a carrier wants to raise or lower the line price depending on the circumstances. The circumstances include the time range, the region, any specific period, and the level of congestion of communication. For example, the line price may be raised in a time range in which the communication traffic is relatively large in a given area (e.g., around noon time), and the line price may be lowered in a time range in which the communication traffic is relatively small-for example, during the late night hours and early morning hours. In this case, the user of appliance 10 or the home appliance cloud operator can switch the line so as to keep the communication fee low.

According to this configuration, a party operating the home appliance cloud is informed of the time-by-time line price by a provider operating carrier-based LPWA, and thus the threshold for line selection can be changed in accordance with a change in the line price. For example, line selection device 301 changes the threshold to a higher value as the line price of carrier-based LPWA is higher.

In addition to a configuration in which the line cost information is sent from the cloud of carrier-based LPWA to a means that selects a line, in another possible configuration, the line cost information may be sent from the cloud of non-carrier-based LPWA to line selection device 301. This configuration allows line selection device 301 to find the accurate fees, and line selection device 301 can select a line more appropriately by using the found fees.

The line cost information can include, for example but not limited to, the amount of data, the level at which the instantaneity is required, and the level at which the transmission reliability is required.

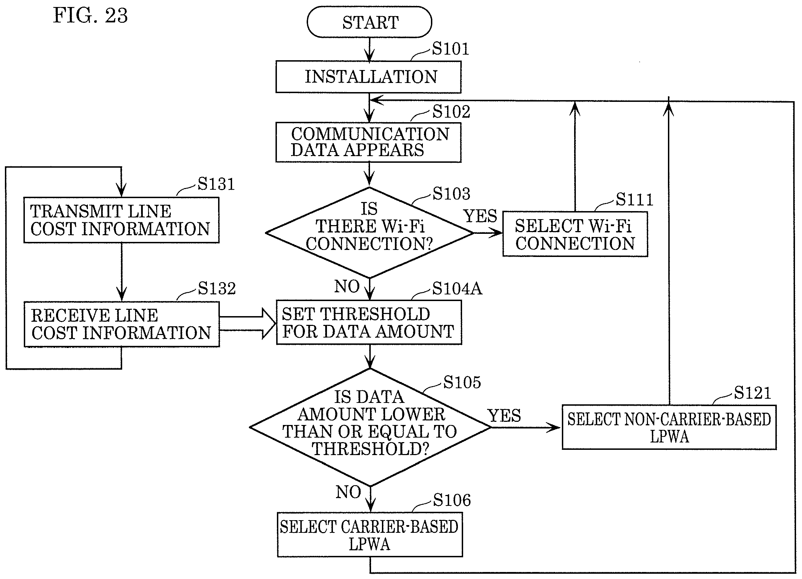

FIG. 23 is a flowchart illustrating a second process of line selection device 301.

The series of processes illustrated in FIG. 23 partially differ from the series of processes illustrated in FIG. 21, and mainly the differences will be described.

The processes illustrated in FIG. 23 include, in addition to the processes illustrated in FIG. 21, a process of transmitting a line cost information signal and a process of receiving a line cost information signal. In addition, the processes illustrated in FIG. 23 include step S104A in place of step S104 illustrated in FIG. 21.

In step S131, transmitter 2201 included in the cloud that houses carrier-based LPWA transmits a line cost information signal that includes line cost information.

In step S132, receiver 2202 of line selection device 301 receives the line cost information included in the line cost information signal transmitted by transmitter 2201. Upon receiving the line cost information, line selection device 301 sets a threshold for the amount of data with the use of the received line cost information (step S104A). For example, as the line price of carrier-based LPWA is higher, line selection device 301 sets the threshold to a higher value with the use of the received line cost information of carrier-based LPWA. Upon completion of step S132, step S131 is executed again.

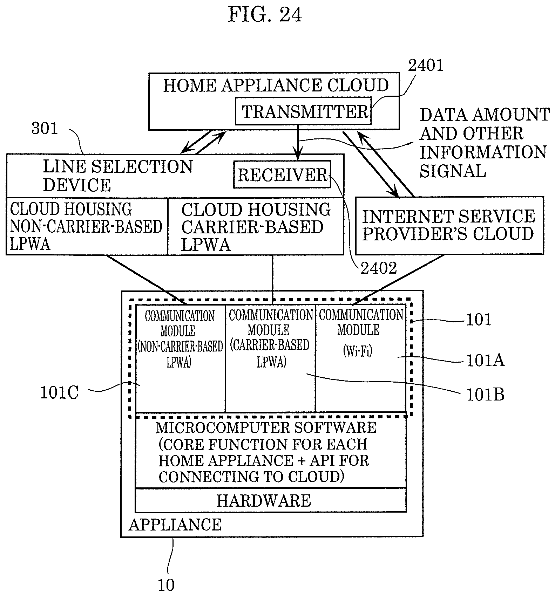

FIG. 24 is a descriptive diagram illustrating a third operation that involves switching among a plurality of communication schemes.

FIG. 24 illustrates a configuration according to the present disclosure. One of the features of the present disclosure lies in that the cloud that houses carrier-based LPWA and the cloud that houses non-carrier-based LPWA are provided by a single company or by affiliated companies and line selection device 301 that switches between the two lines is provided in these clouds. In other words, a plurality of networks include a plurality of long-distance wireless communication networks. In this case, line selection device 301 is provided in a communication channel that connects the home appliance cloud and each of the plurality of long-distance wireless communication networks and selects one network that connects appliance 10 and the home appliance cloud based on a comparison of the communication-related properties of the plurality of long-distance wireless communication networks.

In this case, the line is selected not in the home appliance cloud but in the cloud of the communication line. In addition, transmitter 2401 that transmits data amount and other information is provided in the home appliance cloud, and receiver 2402 that receives the data amount and other information is provided in the cloud of the communication line. A data amount and other information signal includes a log of data appearances, a predicted amount of data to appear over a relatively short period, and a predicted amount of data to appear over a relatively long period. The data amount and other information signal can also include, aside from the amount of data, the level at which the instantaneity is required and the level at which the transmission reliability is required. In this configuration, the line is selected by a communication line company. Thus, the communication fee can be reduced effectively, and the peak in the communication traffic can be shaved in consideration of the circumstances (the communication traffic is tight due to other services or the like) with the line operator.

In this configuration, line selection device 301 switches between carrier-based LPWA and non-carrier-based LPWA. Alternatively, in a case where the internet service provider is also the same company or an affiliated company, as in the case illustrated in FIG. 15, line selection device 301 can select from three or more types of lines.

Herein, there are two types of LPWA connections, and there is one type of connection provided by an internet service provider. Alternatively, the connection may be switched by line selection device 301 from a desired number of connections.

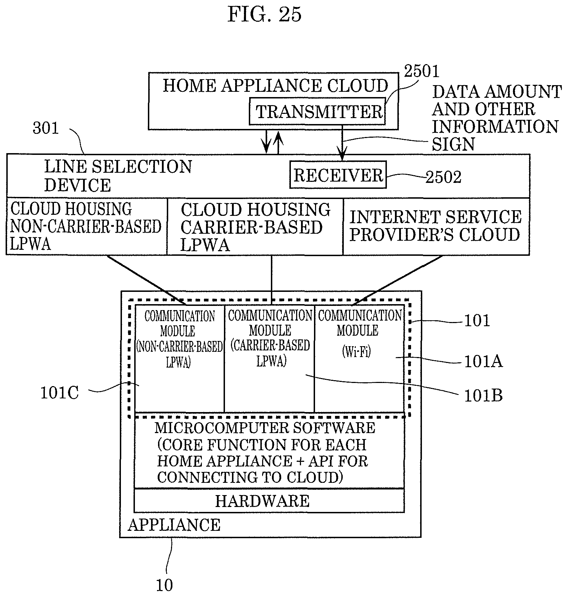

FIG. 25 is a descriptive diagram illustrating a fourth operation that involves switching among a plurality of communication schemes.

In the configuration illustrated in FIG. 25, a line operator can switch line selection device 301 so as to minimize the operation cost. In other words, in a case where a home appliance is capable of Wi-Fi connection, the line is selected such that line selection device 301 is connected through Wi-Fi via an internet service provider. In a case where there is no Wi-Fi connection, the line is selected such that a connection is established via non-carrier-based LPWA (non-licensed band LPWA) that costs less per data. Thus, the amount of data to flow in carrier-based LPWA (licensed band LPWA) can be minimized, and the line operator can keep the cost low. Meanwhile, the user of appliance 10 can receive a connection service at as low a line fee as possible.

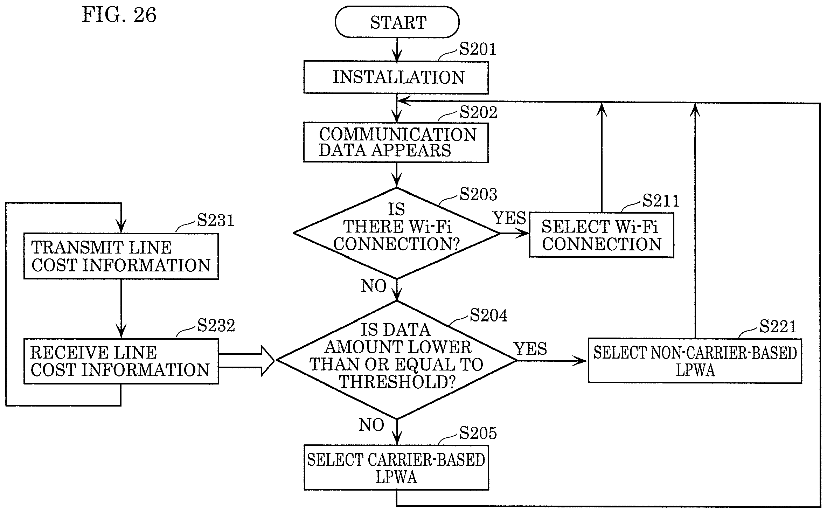

FIG. 26 is a flowchart illustrating a third process of line selection device 301. The third process illustrated in FIG. 26 is an example of a process performed when line selection device 301 determines the type of a network.

In step S231, transmitter 2501 included in the home appliance cloud transmits a data amount and other information signal that includes data amount and other information.

In step S232, receiver 2502 of line selection device 301 receives the data amount and other information included in the data amount and other information signal transmitted by transmitter 2501. Upon completion of step S232, step S231 is executed again.

Appliance 10 is installed (step S201). Then, when communication data appears (step S202), appliance 10 determines whether there is a Wi-Fi connection (step S203). Specifically, this determination can be made by determining whether appliance 10 is connected to a Wi-Fi base station as information required for the communication is set in communication module 101A for Wi-Fi.

In a case where it is determined in step S203 that there is a Wi-Fi connection (YES in step S203), line selection device 301 selects the Wi-Fi connection, that is, selects communication module 101A for Wi-Fi (step S211).

In a case where it is determined in step S203 that there is no Wi-Fi connection (NO in step S203), line selection device 301 determines whether the data amount and other information satisfies a condition (step S204). This data amount and other information is the data amount and other information received from the home appliance cloud in step S232. The aforementioned condition includes a condition that the amount of data is less than or equal to a predetermined amount (e.g., around 10 kB or 100 kB), for example.

In a case where it is determined that the data amount and other information satisfies the condition (YES in step S204), line selection device 301 selects non-carrier-based LPWA, that is, selects communication module 101C for non-carrier-based LPWA (step S221).

In a case where it is determined in step S204 that the amount of data to be communicated is neither less than nor equal to the threshold (NO in step S204), line selection device 301 selects carrier-based LPWA, that is, selects communication module 101B for carrier-based LPWA (step S205).

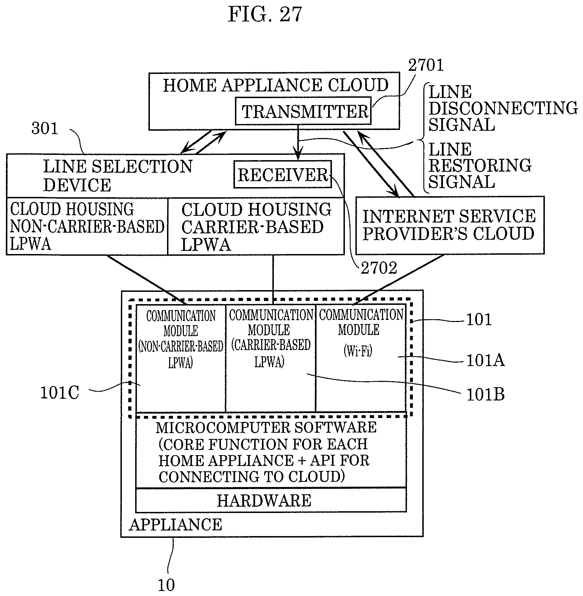

FIG. 27 is a descriptive diagram illustrating a fifth operation that involves switching among a plurality of communication schemes.

FIG. 27 illustrates a configuration according to the present disclosure. One of the features of the present disclosure lies in that the home appliance cloud includes transmitter 2701 that transmits a line disconnecting signal, line selection device 301 that switches between carrier-based LPWA and non-carrier-based LPWA includes receiver 2702 that receives a line disconnecting signal, and a line disconnecting signal is transmitted from transmitter 2701 to receiver 2702. While a connection is being established from Wi-Fi of appliance 10 to the home appliance cloud via an internet service provider's line, the connections of carrier-based LPWA and non-carrier-based LPWA are not used and are disconnected, and thus the line cost can be reduced. Accordingly, in a case where a Wi-Fi connection from appliance 10 is detected by the home appliance cloud, the connections of carrier-based LPWA and non-carrier-based LPWA are disconnected by a line disconnecting signal. Specifically, the line is disconnected by turning off the SIM in carrier-based LPWA. In non-carrier-based LPWA, the link is canceled to shift the line to a disabled state. This configuration can minimize the connection cost.

In this manner, when a plurality of networks include a first network that partially includes a short-distance wireless communication link (Wi-Fi) to be established by appliance 10 and one or more long-distance wireless communication networks, line selection device 301 is provided only in a communication channel that connects the home appliance cloud and each of the one or more long-distance wireless communication networks of the plurality of networks, the home appliance cloud transmits a line disconnecting signal to line selection device 301, and in response to receiving the line disconnecting signal, line selection device 301 disconnects the connection between the home appliance cloud and each of the one or more long-distance wireless communication networks.

This configuration can also work in the configurations for the first to fourth operations.

In the foregoing description, line selection device 301 is provided in the home appliance cloud or in the cloud of carrier-based LPWA and non-carrier-based LPWA. Alternatively, the function of line selection device 301 can be provided by a separate company.

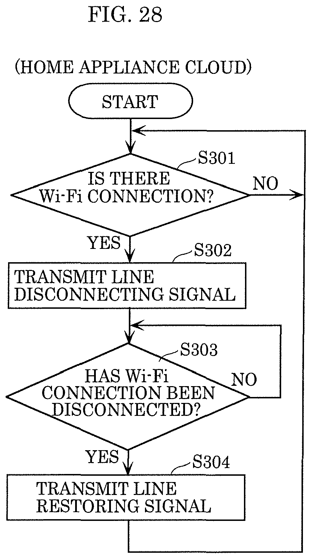

Now, a fourth process of line selection device 301 will be described. FIG. 28 is a flowchart illustrating a process of the home appliance cloud.

The home appliance cloud determines whether appliance 10 is connected to the home appliance cloud via communication module 101A for Wi-Fi, that is, determines whether there is a Wi-Fi connection (step S301). In a case where it is determined that there is a Wi-Fi connection (YES in step S301), the home appliance cloud transmits a line disconnecting signal to line selection device 301 (S302). In a case where there is no Wi-Fi connection (NO in step S301), step S301 is executed again.

Whether appliance 10 is connected via Wi-Fi may be determined based on information that indicates whether appliance 10 is connected via Wi-Fi and that the home appliance cloud obtains from appliance 10.

Next, the home appliance cloud determines whether the connection between communication module 101A for Wi-Fi of appliance 10 and the home appliance cloud has been disconnected (step S303). In a case where it is determined that the Wi-Fi connection has been disconnected (YES in step S303), the home appliance cloud transmits a line restoring signal to line selection device 301 (step S304). In a case where it is determined that the Wi-Fi connection has not been disconnected (NO in step S303), step S303 is executed again.

Upon executing step S304, the home appliance cloud returns to step S301.

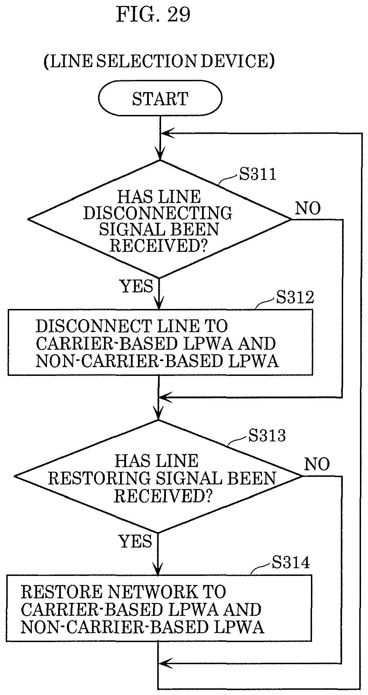

FIG. 29 is a flowchart illustrating a fourth process of line selection device 301.

Line selection device 301 determines whether it has received a line disconnecting signal from the home appliance cloud (step S311). In a case where it is determined that line selection device 301 has received a line disconnecting signal (YES in step S311), line selection device 301 disconnects the lines for carrier-based LPWA and non-carrier-based LPWA (step S312).

Then, line selection device 301 determines whether it has received a line restoring signal from the home appliance cloud (step S313). In a case where it is determined that line selection device 301 has received a line disconnecting signal (YES in step S313), line selection device 301 restores the lines for carrier-based LPWA and non-carrier-based LPWA (step S314).

Upon executing step S314, line selection device 301 returns to step S311.

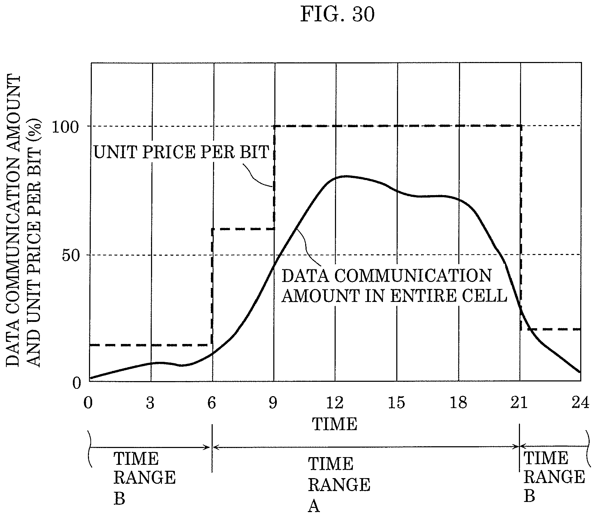

FIG. 30 is a descriptive diagram illustrating the amount of communication data and the unit price per bit in carrier-based LPWA.

FIG. 30 illustrates an example of a change over time in the amount of communication data per base station of a carrier-based LPWA line and an example of the unit price per bit set by a carrier-based LPWA line operator. This line operator sets a high unit price per bit in time range A in which the amount of communication data is relatively large and sets a low unit price per bit in time range B in which the amount of communication data is relatively small. The line cost information signal illustrated in FIG. 30 provides a time-by-time unit price per bit illustrated in FIG. 30. The home appliance cloud switches line selection device 301 such that carrier-based LPWA is selected in time range B in which the unit price per bit illustrated in FIG. 30 is low and a non-carrier-based LPWA line or an internet service provider's line for Wi-Fi is selected in time range A in which the unit price per bit is high.

Thus, the line fee can be kept low as data having a large size is transmitted in time range B. In other words, line selection device 301 switches the line in accordance with the change over time in the line cost information. As the home appliance cloud selects carrier-based LPWA in the time range in which the line operator still has room for the amount of data that can be transmitted, the line can be used effectively at a minimum cost. Thus, this configuration is advantageous for both the line operator and the home appliance cloud service provider.

In addition, in the case of the configuration illustrated in FIGS. 22, 23, and so on, that is, in a case where line selection device 301 is provided in the servers of carrier-based LPWA, non-carrier-based LPWA, and the broadband service provider, the line to be used can be switched in accordance with the change in the unit price per bit illustrated in FIG. 30. In a case where these line operators employ this configuration, the peak in the communication traffic in a short duration in particular can be reduced, which yields a marked effect.

In other words, if the capacity of a line is designed in accordance with a maximum value in the entire time, the line has much unused capacity in almost all the time ranges, and this is not economical. Therefore, the line to be used is switched with the use of line selection device 301 when the communication traffic is at its peak to offload the communication, and thus the peak level can be eased. This provides an advantage in that a facility with a line capacity that is too large to be wasted in almost all the time ranges does not need to be provided.

### (Recapitulation)

Thus far, with regard to an IoT home appliance that, upon being connected to a cloud, can provide various applications or services to the user of the home appliance, a mechanism and a configuration in which the IoT home appliance includes, as a means of communication for use in connecting to the cloud, a plurality of communication schemes and in which a home appliance cloud service provider and a line operator exchange information necessary for switching the line have been described. In this example, the plurality of communication schemes herein include, but are not limited to, Wi-Fi, LPWA1 (cellular carrier-based LPWA), and LPWA2 (non-cellular carrier-based LPWA).

In addition, a mechanism has been described in which, as a "line cost information signal", a "data amount and other information signal", a "line disconnecting signal", and so on are exchanged between clouds, an optimal line (the minimum cost in some cases, the maximum speed in some cases, the maximum reliability in some cases, or the like) is selected from a plurality of communication lines, and the communication is thus carried out.

The home appliance cloud and the communication line cloud exchange not only the communication data but also information signals such as those described above to improve the functionality and to minimize the cost, which is one of the features of the present disclosure.

In addition, since the plurality of communication schemes that differ in their properties are combined and used effectively as described above, a communication line with high communication reliability can be obtained. When a large number of home appliances in an area are to be connected, connecting them with a combination of a plurality of lines can provide a communication line that is stable, firm, and less expensive, as compared to a configuration in which the aforementioned home appliances are connected with a single line.

### (Supplementation)

Some preconditions for the foregoing embodiment are as follows.

An IoT home appliance is provided with an LPWA communication function and a Wi-Fi communication function. A communication module can transmit data of at least several hundred bytes per day as log information of the IoT home appliance. A plurality of types of communication modules for LPWA may be provided. In other words, there may be a case where both cellular-based LPWA (NB-IoT, LTE, Cat-M, or the like) and non-cellular-based LPWA (LoRa or SIGFOX) are provided.

Technical problems with carrier-based LPWA include its high line cost due to a radio spectrum usage tax applied per line or due to the use of a part of the capacity of a mobile data line. For example, the cost is assumed to be around 1,000 yen per year. When the lifetime (approximately 10 years) of a home appliance is considered, the line cost is high (10,000 yen). Meanwhile, there are advantages in that the communication speed is high and the use of a licensed band provides a high communication stability.

Technical problems with non-cellular-based LPWA include its constraint on the amount of data that can be communicated due to its low communication speed. Meanwhile, the use of an unlicensed band can render the radio spectrum usage tax unnecessary. In addition, a base unit is small and inexpensive, and thus no big investment is needed for the facility, which provides an advantage in that the line cost can be kept low. For example, the cost is assumed to be around 100 yen per year.

Technical problems with Wi-Fi include its precondition that the user subscribes to a broadband line service (fiber optic cable, CATV, or the like). In addition, since no connection can be established unless the user configures the initial settings of Wi-Fi and an AP, it cannot be assumed that Wi-Fi can be used in all the households. Meanwhile, it is often the case that the user can use the broadband line with no limit at a fixed rate, and this provides an advantage in that no additional line cost is incurred on the user. The line cost is assumed to be 0 yen.

A home appliance and a home appliance cloud become connected through the communication schemes described above. Data is uploaded and downloaded between the home appliance and the home appliance cloud.

The following have been pointed out from the viewpoint of home appliance cloud service providers.

A home appliance manufacturer serves as a home appliance cloud service provider, and the home appliance cloud service provider wants to keep the user (customer) of the home appliance from bearing the line cost as much as possible. This results in an increase in the price of the home appliance including the line cost, and the usability for the user is lost. Therefore, it is desired that the payment for the line cost be kept as low as possible.

In a case where the home appliance cloud service provider obtains a certain amount of data from a communication carrier through a bulk contract (blanket purchase of a predetermined data frame), the home appliance cloud service provider wants to keep the total amount of used data within this frame and avoid any additional purchase. The home appliance cloud service provider wants to achieve this by selecting a line efficiently.

The following have been pointed out from the viewpoint of LPWA service providers.

An LPWA service provider does not want to lower the line price indiscriminately because of the business structure in which the LPWA service provider receives the line fee in exchange for providing a connection service (a circumstance prominent especially for cellular-based LPWA). Therefore, the LPWA service provider tries to increase the profit by using the radio spectrum resources (radio spectrum usage rate) that the LPWA service provider owns as effectively as possible. For example, the LPWA service provider promotes the use of the line by lowering the line fee (the unit price per bit) in a time range with more available radio spectrum (a time range in which the radio spectrum usage efficiency is low) instead of employing a fixed rate fee system. Conversely, the LPWA service provider regulates the use of the lines by raising the line fee in a time range in which available radio spectrum is tight (in a time range in which the radio spectrum usage efficiency is high and nearly saturated). Thus, the peak in the amount of data is lowered, and any additional investment for communication facilities (base stations, switchboards, clouds, and so on) is suppressed. In other words, the LPWA service provider wants to perform control so that the profit is maximized in total by varying the presented unit price per bit depending on the time.

The following have been pointed out from the viewpoint of broadband line service providers.

An assumption is that a broadband line is used to transmit very large data, such as a moving image. The amount of data to be communicated between a home appliance and a home appliance cloud is less than the aforementioned data, and thus there is less burden. In addition, a fixed rate system is employed, and the broadband line service provider has no intention of finely controlling the amount of data.

Some of the features that can be achieved through the foregoing embodiment are as follows.
(1) For a home appliance cloud service provider, three means of connection (carrier-based LPWA, non-carrier-based LPWA, and Wi-Fi) are switched so as to minimize the cost for line connection. At this point, the cost is reduced, and at the same time, the speed or the capacity of data communication required for a service can also be obtained. In this case, the home appliance cloud selects a line.

As an LPWA service provider selects a line, the line fee is optimized, and the line fee is reduced in total. In other words, although a consideration is given so that the line fee is reduced for a home appliance cloud service provider, this is achieved through a technique that solves the circumstance that an LPWA carrier has (keeping the investment on the facilities low by smoothing the radio spectrum usage efficiency).

With regard to an appliance according to the foregoing embodiment, the following have been pointed out. The appliance according to the foregoing embodiment is a home appliance provided with a plurality of communication schemes. The plurality of communication schemes include, for example but not limited to, Wi-Fi and LPWA. LPWA includes carrier-based LPWA where a licensed band is used (NB-IoT, LTE, Cat-M, or the like) and non-carrier-based LPWA where an unlicensed band is used (LoRa, SIGFOX, or the like). Wi-Fi also uses an unlicensed band.

Differences in the properties of the wireless schemes are utilized. Wi-Fi is a wireless connection through an AP within a house, and LPWA is a wireless connection to a public network outside a house. Thus, their properties differ greatly (FIG. 15). It is conceivable that these differences in the properties can complement each other, and conceivably, three types of communication schemes-Wi-Fi, carrier-based LPWA (LPWA1), and non-carrier-based LPWA (LPWA2)-may be provided. Data uploaded via a plurality of communication schemes is all collected to a home appliance cloud in the end.

With regard to the method of selecting a plurality of communication schemes, there may be a case where a home appliance determines the communication scheme and a case where a cloud determines the communication scheme. In the present disclosure, the assumption is that a cloud determines the communication scheme. Furthermore, there may be a case where a home appliance cloud determines the communication scheme and a case where a cloud of a communication carrier determines the communication scheme (LPWA1, LPWA2).

With regard to the method of selecting a plurality of communication schemes according to the foregoing embodiment, the following have been pointed out.

Basically, it is effective to eliminate any additional cost by using a Wi-Fi line (internet service provider's line) as much as possible so as to keep the line connection cost low or to use non-carrier-based LPWA with a low line cost. However, when the amount of data is large or when the instantaneity is required urgently, non-carrier-based LPWA may not be sufficient, and carrier-based LPWA is selected in that case.

An operation (1) that involves switching among a plurality of communication schemes will be described (see FIG. 20).

Aline selection device determines the type of line that allows a required and sufficient communication speed to be obtained and that minimizes the communication cost, as viewed from the user and the provider of the home appliance cloud.

In a case where the amount of data to be communicated is small or the instantaneity is not required, the line selection device selects non-carrier-based LPWA, which is inexpensive. In a case where the amount of data is large or the instantaneity is required, the line selection device selects carrier-based LPWA. The threshold for the amount of data is specified for the line selection device from a home appliance cloud or from the outside. The threshold is changed as appropriate in accordance with a change over time in the line cost.

Specific examples of selection will be illustrated below.
(1) In a case where there is a Wi-Fi connection, Wi-Fi is selected for all the communication. In a case where there is no Wi-Fi connection, the selection is made as follows. In one example, the threshold for determination is set to 10 kB.
(2) In a case where an operating state of a home appliance is to be uploaded, the amount of data is as small as 10 bytes to several tens of bytes, and thus the line selection device selects non-carrier-based LPWA.
(3) In a case where a malfunctioning state (error code or the like) of a home appliance is to be uploaded, the amount of data is as less as 10 bytes to several tens of bytes, and thus the line selection device selects non-carrier-based LPWA.
(4) In a case where a text character string of around 100 characters to be displayed on a display of a home appliance is to be downloaded, the amount of data is several hundred bytes, and thus the line selection device selects non-carrier-based LPWA.
(5) In a case where a picture or photographic data of around 100 kB to be displayed on a display of a home appliance is to be downloaded, the line selection device selects carrier-based LPWA since the data exceeds the determination threshold of 10 kB.
(6) In a case where firmware for a microcomputer in a home appliance is to be downloaded and overwritten remotely, the line selection device selects carrier-based LPWA since the amount of data is around 1 MB.
(7) The selection may be changed depending on the temporal constraint condition. For example, in a case where the time is pressed in the above (4) (e.g., the text character string is to be displayed in 10 seconds), the line selection device selects carrier-based LPWA having a high communication speed. Meanwhile, in a case where there is a plenty of time in the above (5) (e.g., the picture or the photo is to be displayed in one hour), the line selection device selects non-carrier-based LPWA that is inexpensive but has a low communication speed.
(8) In a case where, even if the amount of data is large, the same piece of data is to be downloaded to a number of home appliances, aside from a method in which the data is downloaded to each home appliance one by one via carrier-based LPWA, the data can be downloaded through simultaneous transmission (broadcast transmission) via non-carrier-based LPWA. In this case, selecting non-carrier-based LPWA allows for a download at a lower cost. In one case, for example, firmware for microcomputers is download simultaneously.

In an actual operation, in terms of the frequency of occurrence of each data type, the data having a relatively small size in the above (1) to (4) occupies 90% or more. Since the line selection device selects non-carrier-based LPWA for such communication, the line cost can be reduced significantly. Since the frequency at which carrier-based LPWA is selected is low, this configuration is highly effective in reducing the cost. Accordingly, this yields an advantageous effect in that the line selection device can determine the type of line that allows a required and sufficient communication speed to be obtained and that minimizes the communication cost.

An operation (2) that involves switching among a plurality of communication schemes will be described (see FIG. 22). In this operation, a home appliance cloud selects a line.

A "line cost information signal" is transmitted from a receiver that is provided in a cloud of carrier-based LPWA and that transmits line cost information to a receiver that is provided in a line selection device of the home appliance cloud and that receives the line cost information. The line cost information may change in accordance with the used time and the total amount of data.

Specific examples of selection will be illustrated below in (1) to (3).
(1) In a case where there is a Wi-Fi connection, Wi-Fi is selected all the time. In a case where there is no Wi-Fi connection, the selection is made as follows.
(2) In one example, when the unit price per bit indicated by the "line cost information signal" is 1 yen per 1 MB, the line selection device sets the threshold for determining whether to make a switch based on the amount of data to 10 kB.
(3) In a case where the "line cost information signal" has been updated and the unit price per bit has changed to 5 yen per 1 MB, the line selection device changes the determination threshold to 50 kB. Thus, the usage rate of carrier-based LPWA is lowered, and an increase in cost can be suppressed.

However, since non-carrier-based LPWA requires more communication time, in consideration of this, the line selection device can also change the determination threshold to 30 kB.

In addition, the line to be selected can be determined not only based simply on the data size but also in consideration of conditions (instantaneity, reliability, etc.) required for the data. For example, the line selection device selects carrier-based LPWA for the data that requires the instantaneity and selects non-carrier-based LPWA for the data that does not require any instantaneity.

By changing the threshold for line selection with the use of a "line cost information signal", the home appliance cloud operator can allow as much communication as possible to flow to non-carrier-based LPWA within the range that does not affect the service, and thus the total line cost can be reduced.

In the foregoing, the unit price per bit (1 yen per 1 MB) is used as a line cost information signal. Alternatively, any desired expression may be employed. In addition, the line cost may be expressed in association with the time or the data size.

In this manner, in a case where a carrier raises or lowers the line price depending on the circumstances, the line selection device can optimally switch the line so as to keep the communication fee for the user or the home appliance cloud operator from increasing.

An operation (3) that involves switching among a plurality of communication schemes will be described (see FIG. 24). In this operation, a communication carrier selects a line.

A cloud of carrier-based LPWA and a cloud of non-carrier-based LPWA are housed in a cloud of a single communication service provider, and a line selection device that switches between the two lines is provided in this cloud.

Alternatively, in addition to the cloud of carrier-based LPWA and the cloud of non-carrier-based LPWA, a broadband line for Wi-Fi connection is also housed in the cloud of a single communication service provider, and a line selection device that switches among the three lines is provided in this cloud.

In this configuration, a "data amount and other information signal" is transmitted from a transmitter that is provided in the home appliance cloud and that transmits data amount and other information to a receiver that is provided in the line selection device in the cloud of the communication carrier and that receives the data amount and other information.

In this example, the data amount and other information signal may be embedded into a data packet. For example, a bit indicating the amount of data may be added to a header section of the data packet.

Alternatively, the data amount and other information can be transmitted in the form of a control packet, which is different from a data packet. In addition, the data amount and other information can be transmitted not through a server-to-server communication path used to transmit a data packet but through a different path. For example, a dedicated line may be provided, and the data amount and other information signal can be sent through this dedicated line.

Specific examples of selection will be illustrated below in (1) and (2).
(1) In a case where there is a Wi-Fi connection, all the communication is carried out via Wi-Fi, and thus no communication passes through the communication carrier's line (carrier-based LPWA, non-carrier-based LPWA).
   When there is no Wi-Fi connection, a line is selected as follows.
(2) Since the communication carrier can find the amount of data with the data amount and other information signal, either carrier-based LPWA or non-carrier-based LPWA is selected for each piece of data based on the convenience of the communication carrier or the condition exchanged between the communication carrier and the home appliance cloud. This selection is made by the line selection device. The communication carrier can set the threshold for line selection as desired.

In one configuration, an "instantaneity requirement information signal" is transmitted from the home appliance cloud to the line selection device in the cloud of the communication carrier. In this configuration, information on the instantaneity of data can be transmitted from the home appliance cloud to the communication carrier. Thus, the communication carrier can select non-carrier-based LPWA preferentially for the data requiring low instantaneity and use carrier-based LPWA only for the data requiring high instantaneity, for example. In this manner, the line cost can be reduced as the communication carrier allows data to flow into non-carrier-based LPWA with a lower line cost.

In one configuration, "data reliability requirement information" is transmitted. In this configuration, a line can be selected in accordance with the level of required reliability of data to be transmitted (prevention of data defect, prevention of data delay). For example, for the data for which the required level of data delay prevention or data defect prevention is high, carrier-based LPWA is selected.

In one configuration, the cloud of the communication carrier houses, in addition to carrier-based LPWA and non-carrier-based LPWA, a broadband line (internet service provider). In this configuration, the line selection device selects a line from the above three types of lines (see FIG. 25).

This configuration can reduce the line cost as the communication carrier preferentially selects a Wi-Fi line (broadband line).

In this configuration, in a case where there is no connection via a Wi-Fi line, the line selection device selects carrier-based LPWA or non-carrier-based LPWA.

Since the line is selected not on the home appliance cloud side but on the communication line's cloud side (communication carrier), there is an advantage in that the operation is simplified for the home appliance cloud as it does not need to select a line. In addition, this configuration offers an advantage for the communication carrier in that the communication carrier can change the selection in accordance with the circumstances of the communication carrier. For example, at a timing when the communication capacity is tight, the communication carrier can select not carrier-based LPWA but non-carrier-based LPWA to lower the peak of the communication traffic.

An operation (4) that involves switching among a plurality of communication schemes will be described (see FIG. 27). This pertains to disconnection of an unnecessary line.

A line disconnecting signal is transmitted from a transmitter that is provided in a home appliance cloud and that transmits a line disconnecting signal to a line selection device.

In a case where the home appliance cloud has detected a connection from a home appliance to a Wi-Fi line, the connection to carrier-based LPWA and non-carrier-based LPWAis disconnected by a line disconnecting signal. Specifically, in carrier-based LPWA, the line is disconnected by turning off the subscriber identity module (SIM) card. In non-carrier-based LPWA, the link is canceled to shift the line to a disabled state.

Even in a case where there is no Wi-Fi connection, the home appliance cloud can disconnect the line for carrier-based LPWA or non-carrier-based LPWA.

For example, the home appliance cloud disconnects the carrier-based LPWA line in a case where the line condition (or the line quality) of non-carrier-based LPWA is good, that is, in a case where the communication speed is relatively high. In non-carrier-based LPWA (in particular in LoRa), the transmission speed can be raised in a case where the receiving power is large, that is, in a case where the distance between the base station and the home appliance is small. The minimum speed of LoRa is 250 bps, but the speed can be raised to 5.4 kbps or 50 kbps in a high-speed mode. In this case, the entire operation can be covered by non-carrier-based LPWA without carrier-based LPWA, and thus the carrier-based LPWA line is disconnected. Disconnecting the carrier-based LPWA line can help reduce the connection cost.

Although non-carrier-based LPWA is inexpensive, there still is a connection cost. Thus, in a case where there is a Wi-Fi connection, it is more advantageous in terms of the cost to disconnect both carrier-based LPWA and non-carrier-based LPWA and to carry out the entire communication via Wi-Fi.

With regard to the line fee, aside from charging fee in the unit price per bit in proportional to the amount of data, a fixed rate base fee may also be incurred. For example, the payment of a radio spectrum usage tax is required in carrier-based LPWA, and thus the base fee needs to be charged even when no data is used. In this respect, the radio spectrum usage tax is not incurred if the line is disconnected (SIM off), and thus the cost to be incurred in carrier-based LPWA can be eliminated. With regard to non-carrier-based LPWA as well, a prescribed maintenance cost is incurred, and thus there may be a fixed rate base fee. In this case as well, as the line is disconnected to enter a disabled state, the cost to be incurred in non-carrier-based LPWA can be eliminated. This provides an advantageous effect in that disconnecting the line that is not used can minimize the connection cost.

As described above, the appliance management system according to the present embodiment communicably connects an appliance and a server via one network selected in accordance with the properties of a plurality of networks. Thus, the appliance and the server can be connected via an appropriate network, and this can prevent any degradation in the communication quality or any wasted resources, which could occur if the appliance and the server are connected via an inappropriate network. In this manner, the appliance management system can appropriately select, from a plurality of networks, a network to be used to connect the appliance and the control cloud.

In addition, the appliance management system can appropriately select, from a plurality of networks, a network to be used to connect the appliance and the control cloud more easily with a selection device provided closer to the server than to the network.

In addition, in a case where the appliance can use a short-distance wireless communication link, the appliance management system connects the appliance and the server with the use of a network that includes the short-distance wireless communication link. Thus, the appliance and the server can be connected via a communication channel that is relatively fast and inexpensive. In this manner, the appliance management system can appropriately select, from a plurality of networks, a network to be used to connect the appliance and the control cloud.

In addition, in a case where the appliance and the server can be connected via two long-distance wireless communication networks having different communication speeds, the appliance management system selects either one of the networks based on a threshold for the amount of data and uses the selected network to connect the appliance and the server. In this manner, the appliance management system can appropriately select, from a plurality of networks, a network to be used to connect the appliance and the control cloud.

In addition, the appliance management system determines a threshold for selecting either one of the two long-distance wireless communication networks in accordance with the cost required for the communication carried out via these networks. Thus, in a case where the cost is high, the use of a lower-speed long-distance wireless communication network can be increased. In this manner, the appliance management system can appropriately select, from a plurality of networks, a network to be used to connect the appliance and the control cloud.

In addition, in a case where the appliance and the server can be connected via two long-distance wireless communication networks having different communication speeds, the appliance management system selects either one of the networks based on a threshold for the time required for the communication and uses the selected network to connect the appliance and the server. In this manner, the appliance management system can appropriately select, from a plurality of networks, a network to be used to connect the appliance and the control cloud.

In addition, the appliance management system determines a threshold for selecting either one of the two long-distance wireless communication networks in accordance with the time required for communication carried out via these networks. Thus, the use of a lower-speed long-distance wireless communication network can be increased for the communication that requires more time. In this manner, the appliance management system can appropriately select, from a plurality of networks, a network to be used to connect the appliance and the control cloud.

In addition, in a case where the selection device is provided in, of a plurality of long-distance communication networks and a short-distance wireless communication network, the plurality of long-distance communication networks, the appliance management system selects a line to be used to connect the appliance and the server with the use of the selection device. Then, the appliance management system can appropriately select, from the plurality of long-distance communication networks, a network to be used to connect the appliance and the control cloud more easily with the selection device provided closer to the server than to the network.

In addition, in the appliance management system, the selection device is provided in, of a plurality of long-distance wireless communication networks and a short-distance wireless communication network, the plurality of long-distance wireless communication networks, and the appliance management system selects a line to be used to connect the appliance and the server with the use of the selection device. Specifically, in a case where the selection device has received a disconnecting signal, the appliance management system disconnects the communication with the plurality of long-distance wireless communication networks, and thus the appliance management system can select the short-distance wireless communication network as the line to be used to connect the appliance and the server. In this manner, the appliance management system can appropriately select, from a plurality of networks, a network to be used to connect the appliance and the control cloud more easily.

In addition, the appliance management system can use the carrier-based Low Power Wide Area (LPWA) network, the non-carrier-based LPWA network, and a network that partially includes a Wi-Fi communication link and appropriately select, from these networks, a network to be used to connect the appliance and the control cloud.

In addition, an appliance according to the present embodiment can control an operation based on control information received from a server via any one of a plurality of networks.

In addition, the appliance can use the carrier-based Low Power Wide Area (LPWA) network, the non-carrier-based LPWA network, and a network that partially includes a Wi-Fi communication link and appropriately select, from these networks, a network to be used to connect the appliance and the control cloud.

Thus far, an embodiment has been described to illustrate the techniques in the present disclosure. The appended drawings and the detailed description are provided for that purpose.

Therefore, the components illustrated in the appended drawings and the detailed description may include not only a component that is essential for solving the technical problems but also a component that is for illustrating the above implementation and is not essential for solving the technical problems. Hence, that these components that are not essential are illustrated in the appended drawings and the detailed description should not immediately give any admission that these non-essential components are considered to be essential.

Since the foregoing embodiment is merely for illustrating the techniques in the present disclosure, various modifications, substitutions, additions, omissions, and so on can be made within the scope of the claims and equivalents thereof.

### INDUSTRIAL APPLICABILITY

The present disclosure can be applied to an appliance that can be appropriately connected to and controlled by a control cloud. Specifically, the present disclosure can be applied to home appliances, such as a refrigerator, a washing machine, or an air conditioner.

### REFERENCE MARKS IN THE DRAWINGS

- 1: appliance management system
- 10: appliance
- 20: server
- 30: selection device
- 101, 101A, 101B, 101C: communication module
- 102, 102A, 102B, 102C, 108: holder
- 103: storage
- 104: controller
- 107: function module
- 109: power source block
- 110: battery
- 111: operator
- 112: display
- 301: line selection device
- 2201, 2401, 2501, 2701: transmitter
- 2202, 2402, 2502, 2702: receiver

## Claims

1. An appliance management system, comprising:
an appliance;
a server that manages the appliance, the server being connectable to the appliance via a plurality of networks that differ from each other; and
a selection device provided in a communication channel that connects the server and each of one or more networks of the plurality of networks, wherein
the selection device
selects, from the plurality of networks, one network to be used for communication between the appliance and the server based on a comparison of communication-related properties of the plurality of networks, and
causes the appliance and the server to communicate via the one network selected.

2. The appliance management system according to claim 1, wherein
the selection device is provided in a communication channel that connects the server and each of the plurality of networks.

3. The appliance management system according to claim 1 or 2, wherein
in a case where the plurality of networks include a first network that partially includes a short-distance wireless communication link to be established by the appliance, the selection device selects the first network as the one network.

4. The appliance management system according to any one of claims 1 to 3, wherein
in a case where the plurality of networks include a second network that is a network for long-distance wireless communication having a communication speed higher than a predetermined communication speed and a third network that is a network for long-distance wireless communication having a communication speed lower than the communication speed of the second network,
the selection device
(a) selects the second network as the one network when an amount of data to be communicated is greater than a first threshold, and
(b) selects the third network as the one network when the amount of data to be communicated is less than or equal to the first threshold.

5. The appliance management system according to claim 4, wherein
the selection device further acquires cost information indicating a cost required for communication carried out via the second network and sets the first threshold to a higher value for higher values of the cost indicated by the cost information acquired.

6. The appliance management system according to any one of claims 1 to 3, wherein
in a case where the plurality of networks include a second network that is a network for long-distance wireless communication having a communication speed higher than a predetermined communication speed and a third network that is a network for long-distance wireless communication having a communication speed lower than the communication speed of the second network,
the selection device
(a) selects the second network as the one network when a time required for communication is greater than a second threshold, and
(b) selects the third network as the one network when the time required for the communication is less than or equal to the second threshold.

7. The appliance management system according to claim 6, wherein
the selection device further acquires cost information indicating a cost required for communication carried out via the second network and sets the second threshold to a higher value for higher values of the cost indicated by the cost information acquired.

8. The appliance management system according to claim 1, wherein
the plurality of networks include a plurality of long-distance wireless communication networks, and
the selection device
is provided in a communication channel that connects the server and each of the plurality of long-distance wireless communication networks, and
selects the one network based on a comparison of communication-related properties of the plurality of long-distance wireless communication networks.

9. The appliance management system according to claim 1, wherein
the plurality of networks include a first network that partially includes a short-distance wireless communication link to be established by the appliance and one or more long-distance wireless communication networks,
the selection device is provided only in a communication channel that connects the server and, of the plurality of networks, each of the one or more long-distance wireless communication networks,
the server transmits a line disconnecting signal to the selection device, and
in response to receiving the line disconnecting signal, the selection device disconnects a connection between the server and each of the one or more long-distance wireless communication networks.

10. The appliance management system according to any one of claims 1 to 9, wherein
the plurality of networks include:
a carrier-based Low Power Wide Area (LPWA) network and a non-carrier-based LPWA network, as long-distance wireless communication networks; and
a network that partially includes a Wi-Fi communication link, as a network that partially includes a short-distance wireless communication link to be established by the appliance.

11. An appliance, comprising:
a plurality of wireless communication modules that connect the appliance to a server managing the appliance via a plurality of networks that differ from each other; and
a controller that controls an operation of the appliance based on control information received from the server via the plurality of wireless communication modules.

12. The appliance according to claim 11, wherein
the plurality of wireless communication modules include a communication module for carrier-based Low Power Wide Area (LPWA), a communication module for non-carrier-based LPWA, and a communication module for Wi-Fi.

13. A method of controlling an appliance management system that includes an appliance and a server, the server being connectable to the appliance via a plurality of different networks and managing the appliance, the method comprising:
selecting, by a selection device provided in a communication channel that connects the server and each of one or more networks of the plurality of networks, one network to be used for communication between the appliance and the server from the plurality of networks based on a comparison of communication-related properties of the plurality of networks; and
causing the appliance and the server to communicate via the one network selected.

## Amended claims

### Amended claims under Art. 19.1 PCT

1. (Amended) An appliance management system, comprising:
an appliance;
a server that manages the appliance, the server being connectable to the appliance via a plurality of networks that differ from each other; and
a selection device provided in a communication channel that connects the server and each of the plurality of networks, wherein
the selection device
selects, from the plurality of networks, one network to be used for communication between the appliance and the server based on a comparison of communication-related properties of the plurality of networks, and
causes the appliance and the server to communicate via the one network selected.

2. (Amended) The appliance management system according to claim 1, wherein
in a case where the plurality of networks include a first network that partially includes a short-distance wireless communication link to be established by the appliance, the selection device selects the first network as the one network.

3. (Amended) The appliance management system according to claim 1 or 2, wherein
in a case where the plurality of networks include a second network that is a network for long-distance wireless communication having a communication speed higher than a predetermined communication speed and a third network that is a network for long-distance wireless communication having a communication speed lower than the communication speed of the second network,
the selection device
(a) selects the second network as the one network when an amount of data to be communicated is greater than a first threshold, and
(b) selects the third network as the one network when the amount of data to be communicated is less than or equal to the first threshold.

4. (Amended) The appliance management system according to claim 3, wherein
the selection device further acquires cost information indicating a cost required for communication carried out via the second network and sets the first threshold to a higher value for higher values of the cost indicated by the cost information acquired.

5. (Amended) The appliance management system according to claim 1 or 2, wherein
in a case where the plurality of networks include a second network that is a network for long-distance wireless communication having a communication speed higher than a predetermined communication speed and a third network that is a network for long-distance wireless communication having a communication speed lower than the communication speed of the second network,
the selection device
(a) selects the second network as the one network when a time required for communication is greater than a second threshold, and
(b) selects the third network as the one network when the time required for the communication is less than or equal to the second threshold.

6. (Amended) The appliance management system according to claim 5, wherein
the selection device further acquires cost information indicating a cost required for communication carried out via the second network, and sets the second threshold to a higher value for higher values of the cost indicated by the cost information acquired.

7. (Amended) An appliance management system, comprising:
an appliance;
a server that manages the appliance, the server being connectable to the appliance via a plurality of networks that differ from each other; and
a selection device provided in a communication channel that connects the server and each of one or more networks of the plurality of networks, wherein
the plurality of networks include a plurality of long-distance wireless communication networks, and
the selection device
is provided in a communication channel that connects the server and each of the plurality of long-distance wireless communication networks,
selects the one network based on a comparison of communication-related properties of the plurality of long-distance wireless communication networks, and
causes the appliance and the server to communicate via the one network selected.

8. (Amended) An appliance management system, comprising:
an appliance;
a server that manages the appliance, the server being connectable to the appliance via a plurality of networks that differ from each other; and
a selection device provided in a communication channel that connects the server and each of one or more networks of the plurality of networks, wherein
the plurality of networks include a first network that partially includes a short-distance wireless communication link to be established by the appliance and one or more long-distance wireless communication networks,
the selection device
is provided only in a communication channel that connects the server and each of the one or more long-distance wireless communication networks,
selects, from the plurality of networks, one network to be used for communication between the appliance and the server based on a comparison of communication-related properties of the plurality of networks, and
causes the appliance and the server to communicate via the one network selected,
the server transmits a line disconnecting signal to the selection device, and
in response to receiving the line disconnecting signal, the selection device disconnects a connection between the server and each of the one or more long-distance wireless communication networks.

9. (Amended) The appliance management system according to any one of claims 1 to 8, wherein
the plurality of networks include:
a carrier-based Low Power Wide Area (LPWA) network and a non-carrier-based LPWA network, as long-distance wireless communication networks; and
a network that partially includes a Wi-Fi communication link, as a network that partially includes a short-distance wireless communication link to be established by the appliance.

10. (Amended) An appliance, comprising:
a plurality of communication modules that wirelessly connect the appliance to a server managing the appliance via a plurality of networks that differ from each other; and
a controller that controls an operation of the appliance based on control information received from the server via the plurality of communication modules, wherein
the plurality of communication modules include a communication module for carrier-based Low Power Wide Area (LPWA), a communication module for non-carrier-based LPWA, and a communication module for Wi-Fi.

11. (Amended) A method of controlling an appliance management system that includes an appliance and a server, the server being connectable to the appliance via a plurality of different networks and managing the appliance, the method comprising:
selecting, by a selection device provided in a communication channel that connects the server and each of the plurality of networks, one network to be used for communication between the appliance and the server from the plurality of networks based on a comparison of communication-related properties of the plurality of networks; and
causing the appliance and the server to communicate via the one network selected.

12. (Canceled)

13. (Canceled)

Statement under Art. 19.1 PCT
The applicant offers the following informal comments in response to the Written Opinion of the International Search Authority for International Application PCT/JP2019/007579.
Description in the Written Opinion
   The International Search Report and the Written Opinion indicate that claims 1, 11, and 13 of the present application lack novelty.
Comments

Amendments have been made to retain the claims having novelty.

The selection device in the appliance management system set forth in claim 1 of the present application controls selection not only from short-distance wireless communication (e.g., Wi-Fi, etc.) but also from long-distance wireless communication (e.g., LPWA, etc.), as indicated by the amended claim 1, which states "... disposed in a communication channel that connects the server and each of the plurality of networks."

In the amended claim 10, the original phrase "a plurality of wireless communication modules that connect..." has been amended to "a plurality of communication modules that wirelessly connect ...." The ground for this amendment can be found in paragraphs [0150], [0151], and so forth of the specification.
